# EUROPEAN PATENT APPLICATION

(11) **EP 4 691 724 A1**
(43) Date of publication of application: **11.02.2026**
(21) Application number: 24780102.0
(22) Date of filing: 25.03.2024
(51) Int. Cl.: B29B 17/00, C08J 11/06, C08L 45/00, C08L 65/00, C08L 67/00, C08L 69/00

(54) **REGENERATED RESIN PRODUCTION METHOD**

(30) Priority: 31.03.2023 JP 2023056883; 20.09.2023 JP 2023153953
(71) Applicant: MITSUBISHI GAS CHEMICAL COMPANY, INC., Chiyoda-ku Tokyo 100-8324 (JP)
(72) Inventor: KATO, Noriyuki, Tokyo 100-8324 (JP); NISHIMORI, Katsushi, Tokyo 125-8601 (JP); MOTEGI, Atsushi, Tokyo 125-8601 (JP); ISHIHARA, Kentaro, Tokyo 100-8324 (JP); OCHI, Noriaki, Tokyo 125-8601 (JP); MATSUMOTO, Mutsumi, Tokyo 125-8601 (JP); SATO, Atsuhiro, Tokyo 125-8601 (JP)
(74) Representative: Hoffmann Eitle
(86) International application number: PCT/JP2024/011548
(87) International publication number: WO 2024/203984

(57) **Abstract**

A method of manufacturing a recycled resin that is excellent in recycling efficiency of molding waste products is provided. A method of manufacturing a recycled resin, comprising: a step (1) in which a waste product composition containing a molding waste product having a runner part is supplied to a vibration transport bed, and the waste product composition is vibration-transported; and a step (2) in which a recycled resin is obtained from the vibration-transported waste product composition.

## Description

### Technical Field

The present invention relates to a method of manufacturing a recycled resin (a regenerated resin), and the like.

### Background Art

In recent years, there have been growing concerns about the deterioration of the natural environment and the increase in the amount of discharged wastes, and a movement to recycle plastic products has been further strengthen with an aim to realize a recycling-oriented society.

Injection molding is a typical manufacturing method for plastic products. Specifically, plastic products (molded bodies) molded into a predetermined shape can be manufactured by pouring a heated molten resin into a mold and then cooling it. In this case, depending on the injection molding method, molding waste products derived from the passage of molten resin in the mold may be generated along with the plastic products. Such molding waste products may be very large in quantity when plastic products are manufactured industrially, and recycling of such molding waste products has been considered.

For example, Patent Literature 1 describes an invention relating to a method of manufacturing a recycled thermoplastic resin molded article in which sprue runners (molding waste products) and/or defective moldings generated during the molding process of thermoplastic resin molded articles are comminuted and mixed with a new thermoplastic resin to obtain a mixture, which is then injection molded into a thermoplastic resin molded article again. The above invention is characterized in that molding is performed by the gas-assisted method even under the circumstances where the melt flow properties of the mixture change, using the same conditions as the molding conditions under which the new thermoplastic resin is used for molding. According to the invention described in Patent Literature 1, it is described that there can be obtained recycled resin molded articles with stable dimensions and high commercial value, free from defects such as sink marks, distortion, and warpage.

### Citation List

### Patent Literature

Patent Literature 1: JP 2006-256339 A

### Summary of Invention

### Technical Problem

When recycling molding waste products, generated molding waste products are collected, and the resulting waste product composition is subjected to a recycling treatment. However, the molding waste products are derived from the passage of molten resin in the mold, and due to their structure, the molding waste products tend to be entangled with each other in the waste product composition. As a result, recycling efficiency is sometimes low when the waste product composition is used as it is for the recycling treatment.

Therefore, the present invention provides a method of manufacturing a recycled resin that is excellent in recycling efficiency of molding waste products.

### Solution to Problem

For example, the present invention is as follows.
[1] A method of manufacturing a recycled resin, comprising:
   a step (1) in which a waste product composition containing a molding waste product having a runner part is supplied to a vibration transport bed, and the waste product composition is vibration-transported; and
   a step (2) in which a recycled resin is obtained from the vibration-transported waste product composition.
[2] The method according to [1], wherein a vibration frequency of the vibration transport bed is from 1 to 1,000 Hz.
[3] The method according to [1] or [2], wherein a supply rate of the waste product composition to the vibration transport bed is from 5 to 100 g/sec.
[4] The method according to any of [1] to [3], wherein an amount of the waste product composition supplied is from 100 to 5,000 g/m with respect to a width of the vibration transport bed.
[5] The method according to any of [1] to [4], wherein the molding waste product has a specific gravity from 0.9 to 1.5.
[6] The method according to any of [1] to [5], wherein a resin that makes up the molding waste product includes a resin having at least one constitutional unit selected from the group consisting of general formulae (1) to (5) set forth below: 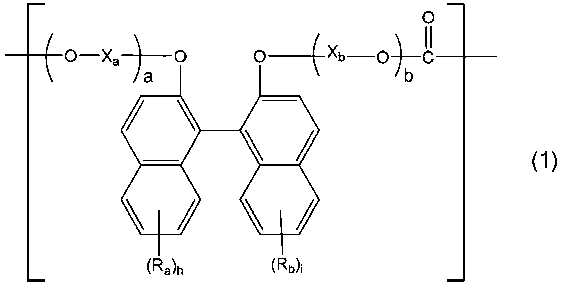 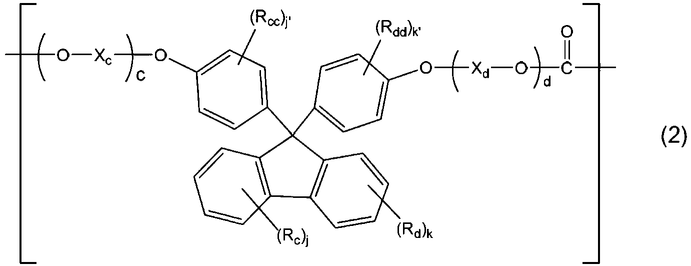 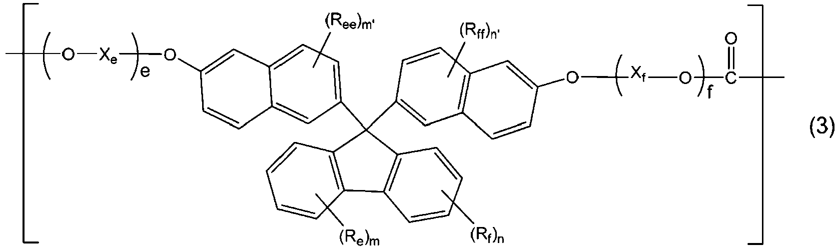 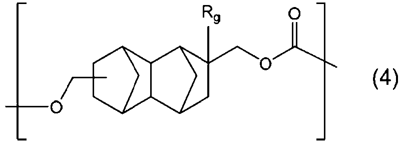 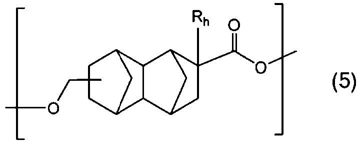 [wherein,
   Xₐ, X_{b}, X_{c}, X_{d}, Xₑ, and X_{f} each independently represent an alkylene group having 1 to 4 carbon atoms,
   Rₐ, R_{b}, R_{c}, R_{cc}, R_{d}, R_{dd}, Rₑ, Rₑₑ, R_{f}, and R_{ff} are each independently selected from a halogen atom, an alkyl group having 1 to 20 carbon atoms, an alkoxy group having 1 to 20 carbon atoms, a cycloalkyl group having 5 to 20 carbon atoms, a cycloalkoxy group having 5 to 20 carbon atoms, an aryl group having 6 to 20 carbon atoms, a heteroaryl group having 3 to 20 carbon atoms and containing one or more heterocyclic atoms selected from O, N, and S, an aryloxy group having 6 to 20 carbon atoms, and -C≡C-Rᵢ,
   Rᵢ represents an aryl group having 6 to 20 carbon atoms or a heteroaryl group having 3 to 20 carbon atoms and containing one or more heterocyclic atoms selected from O, N, and S,
   a, b, c, d, e, and f each independently represent an integer from 0 to 10,
   h, i, j, j', k, k', m, m', n, and n' each independently represent an integer from 0 to 4, and
   R_{g} and Rₕ each independently represent a hydrogen atom or an alkyl group having 1 to 3 carbon atoms].
[7] The method according to any of [1] to [6], wherein a resin that makes up the molding waste product includes an impurity resin having at least one constitutional unit selected from the group consisting of general formulae (6) to (8) set forth below: 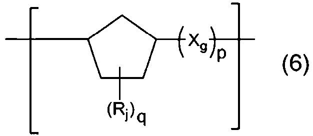 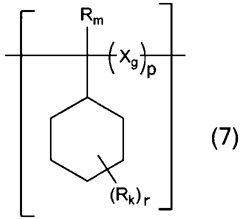 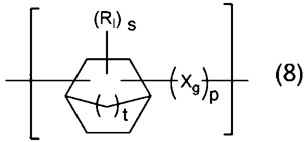 [wherein,
   each X_{g} independently represents an alkylene group having 1 to 10 carbon atoms,
   Rⱼ, Rₖ, and Rₗ are each independently selected from a halogen atom, a substituted or unsubstituted alkyl group having 1 to 20 carbon atoms, a substituted or unsubstituted alkoxy group having 1 to 20 carbon atoms, a substituted or unsubstituted cycloalkyl group having 5 to 20 carbon atoms, a substituted or unsubstituted cycloalkoxy group having 5 to 20 carbon atoms, a substituted or unsubstituted aryl group having 6 to 20 carbon atoms, a substituted or unsubstituted heteroaryl group having 3 to 20 carbon atoms and containing one or more heterocyclic atoms selected from O, N, and S, a substituted or unsubstituted aryloxy group having 6 to 20 carbon atoms, and -C≡C-Rᵢ,
   Rᵢ represents a substituted or unsubstituted aryl group having 6 to 20 carbon atoms or heteroaryl group having 3 to 20 carbon atoms and containing one or more heterocyclic atoms selected from O, N, and S,
   each p independently represents an integer of 0 or 1,
   q, r, and s each independently represent an integer from 0 to 10,
   t represents an integer from 1 to 3,
   wherein when q is 2 or more and two Rⱼ's are present at adjacent carbon atoms, the two Rⱼ's may be bound together to form a ring structure,
   when r is 2 or more and two Rₖ's are present at adjacent carbon atoms, the two Rₖ's may be bound together to form a ring structure,
   when s is 2 or more and two Rₗ's are present at adjacent carbon atoms, the two Rₗ's may be bound together to form a ring structure, and
   Rₘ represents a hydrogen atom or an alkyl group having 1 to 3 carbon atoms].
[8] The method according to any of [1] to [7], wherein a resin that makes up the molding waste product includes a resin having at least one constitutional unit selected from the group consisting of general formulae (9) to (11) set forth below: 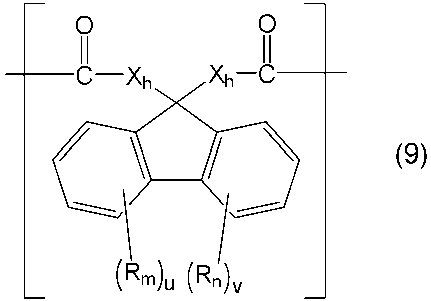 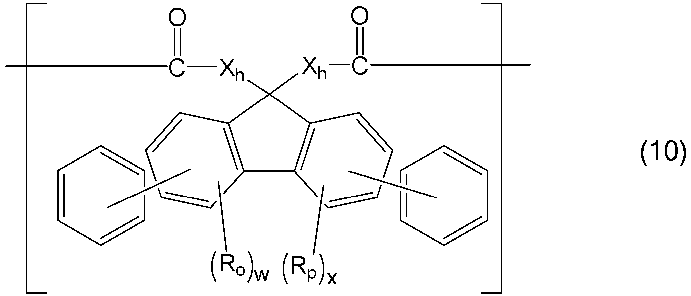 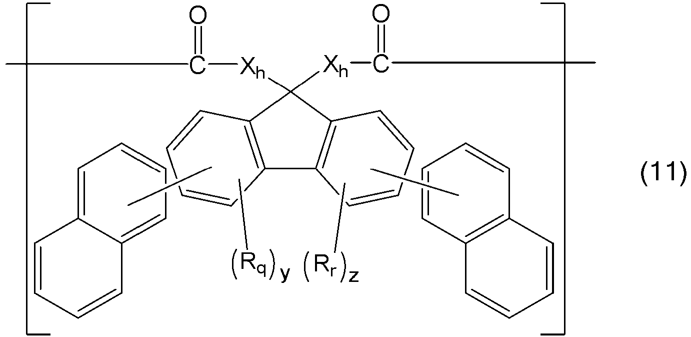 [wherein,
   each Xₕ independently represents an alkylene group having 1 to 8 carbon atoms,
   Rₘ, Rₙ, Rₒ, Rₚ, R_{q}, and Rᵣ are each independently selected from a halogen atom, a cyano group, and a substituted or unsubstituted alkyl group having 1 to 6 carbon atoms, and
   u, v, w, x, y, and z each independently represent an integer from 0 to 2].

### Advantageous Effects of Invention

According to the present invention, a recycled resin can be manufactured from molding waste products with excellent recycling efficiency.

### Brief Description of Drawings

[Fig. 1] Fig. 1 schematically shows one embodiment of a mold.
[Fig. 2] Fig. 2 schematically shows one embodiment after injection molding.
[Fig. 3] Fig. 3 is a schematic diagram of an integrated product of plastic products and molding waste products obtained after injection molding.

### Description of Embodiments

According to the present invention, a method of manufacturing a recycled resin is provided. The manufacturing method includes: a step (1) in which a waste product composition containing a molding waste product having a runner part is supplied to a vibration transport bed, and the waste product composition is vibration-transported; and a step (2) in which a recycled resin is obtained from the vibration-transported waste product composition.

Hereinafter, the present invention will be described with reference to the drawings. Note that the drawings may be exaggerated for illustrative purposes and may differ from actual dimensions.

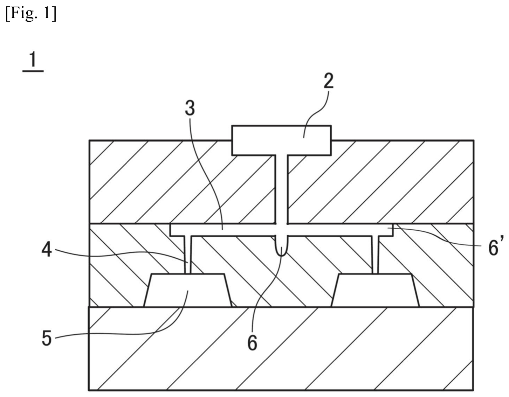

Fig. 1 schematically shows one embodiment of a mold. A mold 1 has a sprue 2, a runner 3, a gate 4, a cavity/core 5, and cold slug wells 6 and 6'.

Molten resin is injected and poured into the mold 1 from the sprue 2. The inner diameter of the sprue 2 is circular, and the inner diameter increases toward the inside of the mold 1. Therefore, the sprue 2 has an approximately truncated conical shape. Also, the length of the sprue 2 usually depends on the distance to the runner 3, that is, the thickness of the mold.

The molten resin that has been injected from the sprue 2 passes through the runner 3, which is branched into 2 sections. The length and inner diameter of the runner 3 are set in consideration of the shape of the molded article, properties of the molten resin, and other factors. The runner 3 usually has an approximately cylindrical shape. Note that the runner 3 is branched into 2 sections in Fig. 1, but it may be only one runner with no branches, or it may be branched into 3 or more sections. If the molded article is small, in terms of manufacturing efficiency, the runner 3 is preferably branched into 3 or more sections, more preferably from 3 to 30 sections, still more preferably from 3 to 25 sections, particularly preferably from 3 to 20 sections, extremely preferably from 3 to 10 sections, and most preferably from 4 to 8 sections.

The molten resin that has passed through the runner 3 passes through the gate 4. The gate 4 has the function of controlling the injection rate of molten resin into the cavity/core 5. Usually, the inner diameter of the gate 4 is set smaller than the inner diameter of the runner 3, which allows for a higher injection rate of molten resin. Note that the gate 4 is formed in the direction perpendicular to the runner 3 in Fig. 1, but it may be formed in the direction parallel to the runner 3.

The molten resin that has passed through the gate 4 is injected into the cavity/core 5. Here, the cavity/core 5 is composed of a cavity, which is a concave part, and a core, which is a convex part. In the cavity/core 5, molten resin is injected into the cavity (concave part), and the desired shape of a plastic product (molded body) can be formed by a hollow portion created by the combination of the cavity (concave part) and the core (convex part). Note that the cavity/core 5 can be made to have a so-called "nested structure", in which a pocket is machined in the mold 1, and a separately made cavity and core are attached to the pocket.

In the mold 1, the cold slug well 6 and the cold slug well 6' are formed at the end of the sprue 2 and at the end of the runner, respectively. The cold slug wells 6 and 6' have the function of preventing molding defects and other problems in plastic products by sealing impurities, decomposition gases, and the like that may be contained in the tip of the molten resin.

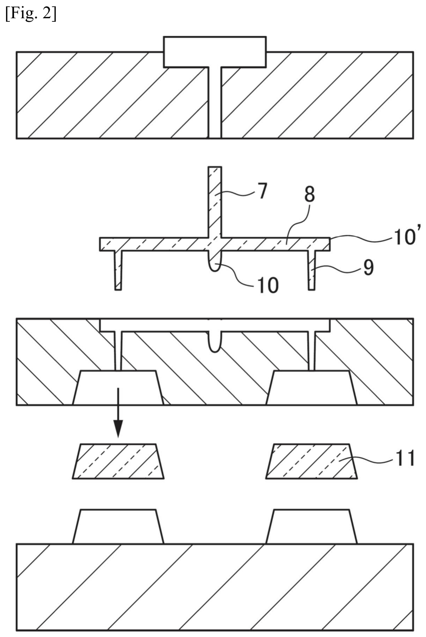

After injection/pouring of the molten resin, the mold is cooled, thereby solidifying the molten resin present in the sprue 2, the runner 3, the gate 4, the cavity/core 5, and the cold slug wells 6 and 6' (cold runner method). Fig. 2 schematically shows one embodiment after injection molding. In Fig. 2, the plastic product 11 is taken out, detached from the molding waste product. Note that the plastic product 11 and the molding waste product may be taken out in an integrated state, and then the plastic product 11 may be detached.

The molding waste product shown in Fig. 2 includes a sprue part 7 derived from the sprue, a runner part 8 derived from the runner, a gate part 9 derived from the gate, and cold slug well parts 10 and 10' derived from the cold slug wells. The molding waste products tend to be entangled with each other, for example, because it has the runner part 8. For this reason, for example, when attempting to put a waste product composition containing the molding waste product into a comminutor, the entanglement of the molding waste product may cause problems in putting it into the comminutor. Thus, recycling efficiency is sometimes low when attempting to use the waste product composition as it is.

In contrast, according to the present invention, the entanglement of the molding waste product can be eliminated or mitigated by the process of vibration transport before recycling the waste product composition. As a result, a recycled resin can be manufactured from molding waste products with excellent recycling efficiency.

Hereinafter, each step will be described in detail.

### 1. Step (1)

The step (1) is a step in which a waste product composition containing a molding waste product having a runner part is supplied to a vibration transport bed, and the waste product composition is vibration-transported.

### <Waste product composition>

The waste product composition contains a molding waste product having a runner part. In addition to that, the waste product composition may further contain a molded article collected after having been used as a part of a product in the market, a defective product generated in the molding process, a defective product generated in the productization process, an unused molded article that is no longer needed, and the like.

For the waste product composition, the same lot of molding waste products may be collected for use, or different lots of molding waste products may be collected and combined for use.

### (Molding waste product)

The molding waste product has a runner part. The molding waste product may further have at least one selected from the group consisting of a sprue part, a gate part, and a cold slug well part.

Note that at least one of the runner part, the sprue part, the gate part, and the cold slug well part may fall out of the molding waste product due to breakage or the like caused by mechanical shocks such as collection, transport, and mixing of the molding waste product. In one embodiment, the molding waste product has a sprue part and a runner part. In one embodiment, the molding waste product has a sprue part, a runner part, and a gate part. In one embodiment, the molding waste product has a sprue part, a runner part, and a cold slug well part. In one embodiment, the molding waste product has a sprue part, a runner part, a gate part, and a cold slug well part. Note that the molding waste product composition may contain molding waste products of different shapes. Note that the term "have" as used herein is synonymous with "contain", for example, as it is permissible to have other configurations.

As used herein, the term "runner part" means a part having a shape derived from a runner (flow path for molten resin) in the mold. The molding waste product has a runner part, which makes it easier for the molding waste product to be entangled with each other.

The shape of the runner part is preferably cylindrical. Also, the runner part may have a shape that is branched in 2 or more directions, preferably 2 directions or 3 directions, in the middle thereof.

The runner part is preferably formed in the direction perpendicular to the length of the sprue part. This can prevent molding defects. However, formation of the runner part in the direction perpendicular to the length of the sprue part may cause entanglement of the molding waste product with each other.

In addition, as described above, the mold may have a structure in which molten resin injected from the sprue flows in 2 or more directions by means of branched runners. Therefore, the molding waste product may have two or more runner parts. In one embodiment, the molding waste product preferably has 3 or more runner parts, more preferably has from 3 to 30 runner parts, still more preferably has from 3 to 25 runner parts, particularly preferable has from 3 to 20 runner parts, extremely preferably has from 3 to 10 runner parts, and most preferably has from 4 to 8 runner parts.

The inner diameter of the runner part varies depending on the physical properties of the molten resin to be used, the shape of the desired plastic product (molded article), and other factors, but is preferably from 0.1 to 5 mm, more preferably from 0.1 to 4 mm, and still more preferably from 1 to 4 mm.

The length of the runner part (when the runner part is cylindrical, corresponding to the height of the cylinder) is preferably from 0.1 to 200 mm, more preferably from 1 to 100 mm, and still more preferably from 1 to 50 mm.

As used herein, the term "sprue part" means a part having a shape derived from a sprue (flow path for molten resin) in the mold.

The shape of the sprue part is not particularly limited, but is preferably a truncated conical shape.

The inner diameter of the sprue part varies depending on the physical properties of the molten resin to be used, the shape of the desired plastic product (molded article), and other factors, but is preferably from 0.1 to 10 mm, more preferably from 1 to 8 mm, and still more preferably from 1 to 6 mm. Note that the term "inner diameter" as used herein means the largest distance between two points on the contour line of a cross section perpendicular to the longitudinal direction of the object. For example, when the sprue part has a truncated conical shape, its maximum inner diameter corresponds to "inner diameter".

The length of the sprue part (when the sprue part has a truncated conical shape, corresponding to the height of the truncated cone) is preferably from 0.1 to 200 mm, more preferably from 1 to 100 mm, and still more preferably from 1 to 50 mm.

As used herein, the term "gate part" means a part having a shape derived from a gate (flow path for molten resin) in the mold.

The shape of the gate part is not particularly limited and can be appropriately set depending on the physical properties of the molten resin to be used, the shape of the desired plastic product (molded article), and other factors.

The inner diameter of the gate part varies depending on the physical properties of the molten resin to be used, the shape of the desired plastic product (molded article), and other factors, but is preferably from 0.1 to 5 mm, more preferably from 0.1 to 3 mm, and still more preferably from 0.1 to 2 mm. The inner diameter of the gate part is preferably smaller than the inner diameter of the runner part.

The length of the gate part is not particularly limited either, and can be appropriately set depending on the physical properties of the molten resin to be used, the shape of the desired plastic product (molded article), and other factors.

As used herein, the term "cold slug well part" means a part having a shape derived from a cold slug well (sealing part for molten resin containing impurities, decomposition gases, and the like) in the mold.

The shape of the cold slug well part is not particularly limited, but is preferably in the shape of a test tube, a truncated cone, or a cylinder.

The inner diameter of the cold slug well part varies depending on the physical properties of the molten resin to be used, the shape of the desired plastic product (molded article), and other factors, but when the gate part is formed at the end of the sprue part, it is preferably from 0.1 to 10 mm, and more preferably from 1 to 8 mm.

Also, when the gate part is formed at the end of the runner part, the inner diameter of the cold slug well part is preferably from 0.1 to 5 mm, and more preferably from 1 to 4 mm.

The length of the cold slug well part is not particularly limited, but is preferably from 0.1 to 20 mm, and more preferably from 0.1 to 10 mm.

The specific gravity of the molding waste product is preferably from 0.9 to 1.5, more preferably from 0.9 to 1.4, more preferably from 1.0 to 1.4, still more preferably from 1.0 to 1.3, and particularly preferably from 1.0 to 1.1 or from 1.1 to 1.3. The specific gravity of the molding waste product in the above-mentioned range is preferable because it is easier to eliminate or mitigate entanglement of the molding waste product with each other through vibration transport.

In one embodiment, when a resin that makes up the molding waste product includes a resin having at least one constitutional unit selected from the group consisting of general formulae (1) to (5) set forth below, the specific gravity of the molding waste product is preferably from 1.0 to 1.5, more preferably from 1.0 to 1.4, and still more preferably from 1.1 to 1.3.

Also, in one embodiment, when a resin that makes up the molding waste product includes a resin having at least one constitutional unit selected from the group consisting of general formulae (6) to (8) set forth below, the specific gravity of the molding waste product is preferably from 0.9 to 1.1, and more preferably from 1.0 to 1.1.

Furthermore, in one embodiment, when a resin that makes up the molding waste product includes a resin having at least one constitutional unit selected from the group consisting of general formulae (9) to (11) set forth below, the specific gravity of the molding waste product is preferably from 1.0 to 1.5, more preferably from 1.0 to 1.4, and still more preferably from 1.1 to 1.3.

The molding waste product includes a resin, an additive, decomposition products thereof, and the like. Note that the term "resin" as used herein means one having a weight average molecular weight of 1000 or more.

The resin that makes up the molding waste product is not particularly limited, but is usually a thermoplastic resin. For such a resin, the type of resin and combination may be set depending on the physical properties of the desired plastic product (molded body) and other factors.

In one embodiment, the resin that makes up the molding waste product preferably includes a resin having at least one constitutional unit selected from the group consisting of general formulae (1) to (5) set forth below, and more preferably includes a resin having at least one constitutional unit selected from the group consisting of the general formulae (1) to (4).

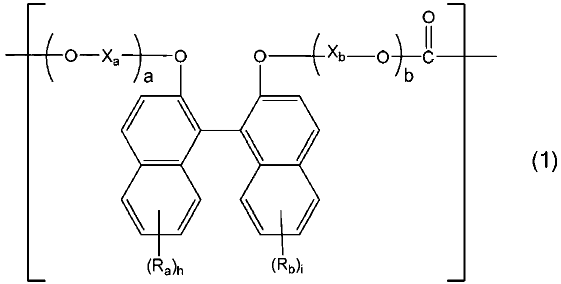

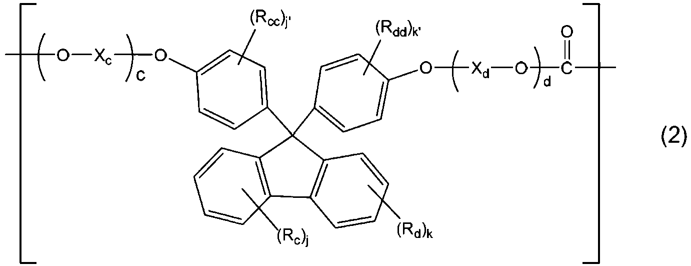

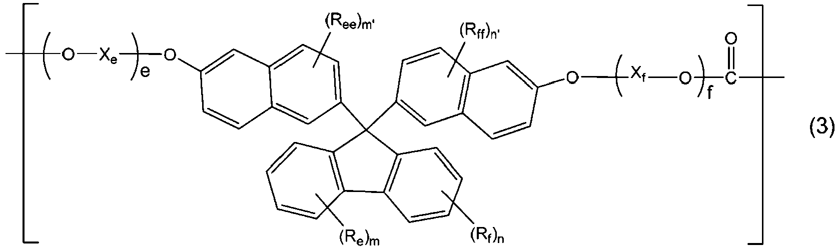

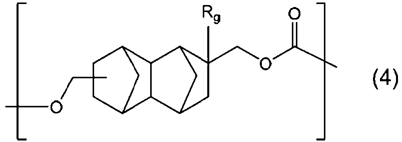

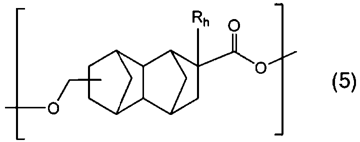

In the above formulae, Xₐ, X_{b}, X_{c}, X_{d}, Xₑ, and X_{f} each independently represent an alkylene group having 1 to 4 carbon atoms. Examples of the alkylene group having 1 to 4 carbon atoms include methylene, ethylene, propylene, isopropylene, butylene, isobutylene, sec-butylene, and tert-butylene. Among them, methylene and ethylene are preferable, and ethylene is more preferable.

Rₐ, R_{b}, R_{c}, R_{cc}, R_{d}, R_{dd}, Rₑ, Rₑₑ, R_{f}, and R_{ff} are each independently selected from a halogen atom, an alkyl group having 1 to 20 carbon atoms, an alkoxy group having 1 to 20 carbon atoms, a cycloalkyl group having 5 to 20 carbon atoms, a cycloalkoxy group having 5 to 20 carbon atoms, an aryl group having 6 to 20 carbon atoms, a heteroaryl group having 3 to 20 carbon atoms and containing one or more heterocyclic atoms selected from O, N, and S, an aryloxy group having 6 to 20 carbon atoms, and -C≡C-Rᵢ.

Examples of the halogen atom include fluorine atom, chlorine atom, bromine atom, and iodine atom.

Examples of the alkyl group having 1 to 20 carbon atoms include methyl group, ethyl group, propyl group, isopropyl group, butyl group, isobutyl group, sec-butyl group, tert-butyl group, pentyl group, hexyl group, heptyl group, octyl group, nonyl group, decyl group, undecyl group, dodecyl group, and icosyl group.

Examples of the alkoxy group having 1 to 20 carbon atoms include methoxy group, ethoxy group, propyloxy group, isopropyloxy group, butoxy group, isobutoxy group, sec-butoxy group, tert-butoxy group, pentyloxy group, hexyloxy group, heptyloxy group, octyloxy group, nonyloxy group, decyloxy group, undecyloxy group, dodecyloxy group, and icosyloxy group.

Examples of the cycloalkyl group having 5 to 20 carbon atoms include cyclopentyl group, cyclohexyl group, cycloheptyl group, cyclooctyl group, cyclododecyl group, cyclotridecyl group, cyclotetradecyl group, cyclopentadecyl group, cyclooctadecyl group, bicyclo[2.2.1]heptyl group, and bicyclo[2.2.2]octyl group.

Examples of the cycloalkoxy group having 5 to 20 carbon atoms include cyclopentyloxy group, cyclohexyloxy group, cycloheptyloxy group, cyclooctyloxy group, cyclododecyloxy group, cyclotridecyloxy group, cyclotetradecyloxy group, cyclopentadecyloxy group, cyclooctadecyloxy group, bicyclo[2.2.1]heptyloxy group, and bicyclo[2.2.2]octyl group oxy.

Examples of the aryl group having 6 to 20 carbon atoms include phenyl group, tolyl group, xylyl group, trimethylphenyl group, tetramethylphenyl group, ethylphenyl group, ethylmethylphenyl group, diethylphenyl group, propylphenyl group, isopropylphenyl group, isopropylmethylphenyl group, benzyl group, phenethyl group, phenylpropyl group, naphthyl group, anthracenyl group, phenanthrenyl group, naphthacenyl group, chryserinyl group, pyrenyl group, biphenyl group, terphenyl group, and quaterphenyl group.

Examples of the heteroaryl group having 3 to 20 carbon atoms and containing one or more heterocyclic atoms selected from O, N, and S include: furanyl group, benzofuranyl group, isobenzofuranyl group, pyrrolyl group, imidazolyl group, pyrazolyl group, triazolyl group, pyridyl group, pyrazyl group, pyrimidyl group, pyridazyl group, pyrrolidyl group, indolyl group, isoindolyl group, indazolyl group, quinolyl group, isoquinolyl group, naphthyridyl group, quinoxalyl group, quinazolyl group, pteridyl group, phenanthridyl group, acridinyl group, pyrimidinyl group, phenanthrolinyl group, phenazinyl group, thiophenyl group, thiopyranyl group, benzothiophenyl group, benzothiopyranyl group, oxazolyl group, isoxazolyl group, thiazolyl group, isothiazolyl group, furazanyl group, oxadiazolyl group, dithiazolyl group, benzoxazolyl group, benzisoxazolyl group, benzothiazolyl group, and benzisothiazolyl group.

Examples of the aryloxy group having 6 to 20 carbon atoms include phenyloxy group, tolyloxy group, xylyloxy group, trimethylphenyloxy group, tetramethylphenyloxy group, ethylphenyloxy group, ethylmethylphenyloxy group, diethylphenyloxy group, propylphenyloxy group, isopropylphenyloxy group, isopropylmethylphenyloxy group, naphthyloxy group, anthracenyloxy group, phenanthrenyloxy group, naphthacenyloxy group, chryserinyloxy group, pyrenyloxy group, biphenyloxy group, terphenyloxy group, and quaterphenyloxy group.

Among them, Rₐ, R_{b}, R_{c}, R_{cc}, R_{d}, P_{dd}, Rₑ, Rₑₑ, R_{f}, and R_{ff} each are preferably a phenyl group or a naphthyl group, and more preferably a phenyl group, a 1-naphthyl group, or a 2-naphthyl group.

Rᵢ represents an aryl group having 6 to 20 carbon atoms or a heteroaryl group having 3 to 20 carbon atoms and containing one or more heterocyclic atoms selected from O, N, and S. Examples of the aryl group having 6 to 20 carbon atoms and the heteroaryl group having 3 to 20 carbon atoms and containing one or more heterocyclic atoms selected from O, N, and S include those described above. Among them, Rᵢ is preferably a phenyl group or a naphthyl group, and more preferably a phenyl group, a 1-naphthyl group, or a 2-naphthyl group.

The subscripts a, b, c, d, e, and f each independently represent an integer from 0 to 10. In one embodiment, a, b, c, d, e, and f, each independently, are preferably an integer from 0 to 5, more preferably an integer from 0 to 3, and still more preferably 0 or 1. In another embodiment, a, b, c, d, e, and f, each independently, are preferably an integer from 1 to 5, more preferably an integer from 1 to 3, and still more preferably 1 or 2.

The subscripts h, i, j, j', k, k', m, m', n, and n'n each independently represent an integer from 0 to 4, each are preferably an integer from 0 to 3, more preferably an integer from 0 to 2, still more preferably 0 or 1, and particularly preferably 0.

Each R_{g} independently represents a hydrogen atom or an alkyl group having 1 to 3 carbon atoms. Examples of the alkyl group having 1 to 3 carbon atoms include methyl group, ethyl group, propyl group, and isopropyl group. Among them, it is preferable that each R_{g} is independently a hydrogen atom.

Specific examples of the constitutional unit represented by the formula (1) include constitutional units derived from 2,2'-bis(1-hydroxymethoxy)-1,1'-binaphthalene, from 2,2'-bis(2-hydroxyethoxy)-1,1'-binaphthalene (also referred to as "BNE"), from 2,2'-bis(2-hydroxyethoxy)-6,6'-diphenyl-1,1'-binaphthalene (also referred to as "DP"), from 2,2'-bis(3-hydroxypropyloxy)-1,1'-binaphthalene, and from 2,2'-bis(4-hydroxybutoxy)-1,1'-binaphthalene. In one embodiment, the constitutional unit represented by the formula (1) contains at least one of constitutional units derived from 2,2'-bis(2-hydroxyethoxy)-1,1'-binaphthalene (BNE) and from 2,2'-bis(2-hydroxyethoxy)-6,6'-diphenyl-1,1'-binaphthalene (DP).

Specific examples of the constitutional units represented by the formula (2) include constitutional units derived from 9,9-bis[4-(2-hydroxyethoxy)phenyl]fluorene (also referred to as "BPEF"), from 9,9-bis(4-hydroxyphenyl)fluorene, from 9,9-bis[4-(2-hydroxyethoxy)-3-methylphenyl]fluorene, from 9,9-bis[4-(2-hydroxyethoxy)-3-tert-butylphenyl]fluorene, from 9,9-bis[4-(2-hydroxyethoxy)-3-isopropylphenyl]fluorene, from 9,9-bis[4-(2-hydroxyethoxy)-3-cyclohexylphenyl]fluorene, and from 9,9-bis[4-(2-hydroxyethoxy)-3-phenylphenyl]fluorene (also referred to as "BPPEF"). In one embodiment, the constitutional units represented by the formula (2) include at least one of constitutional units derived from a compound selected from 9,9-bis[4-(2-hydroxyethoxy)phenyl]fluorene (BPEF) and 9,9-bis[4-(2-hydroxyethoxy)-3-phenylphenyl]fluorene (BPPEF).

Specific examples of the constitutional units represented by the formula (3) include constitutional units derived from 9,9-bis(hydroxy(poly)alkoxynaphthyl)fluorenes. Examples thereof include constitutional units derived from a compound selected from 9,9-bis[6-(1-hydroxymethoxy)naphthalene-2-yl]fluorene (also referred to as "BNEF"), 9,9-bis[6-(2-hydroxyethoxy)naphthalene-2-yl]fluorene, 9,9-bis[6-(3-hydroxypropoxy)naphthalene-2-yl]fluorene, and 9,9-bis[6-(4-hydroxybutoxy)naphthalene-2-yl]fluorene. In one embodiment, the constitutional units represented by the formula (3) include a constitutional unit derived from 9,9-bis[6-(2-hydroxyethoxy)naphthalene-2-yl]fluorene (BNEF).

Specific examples of the constitutional units represented by the formula (4) include constitutional units derived from decahydro-1,4:5,8-dimethanonaphthalenediols (also referred to as "D-NDM"). Examples thereof include constitutional units derived from a compound selected from (decahydro-1,4:5,8-dimethanonaphthalene-2,6-diyl)dimethanol, (decahydro-1,4:5,8-dimethanonaphthalene-2,7-diyl)dimethanol, (2-methyldecahydro-1,4:5,8-dimethanonaphthalene-2,6-diyl)dimethanol, (2-methyldecahydro-1,4:5,8-dimethanonaphthalene-2,7-diyl)dimethanol, (2-ethyldecahydro-1,4:5,8-dimethanonaphthalene-2,6-diyl)dimethanol, and (2-ethyldecahydro-1,4:5,8-dimethanonaphthalene-2,7-diyl)dimethanol.

Specific examples of the constitutional units represented by the formula (5) include constitutional units derived from decahydro-1,4:5,8-dimethanonaphthalene-2-methoxycarbonyl-6(7)-methanols. Examples thereof include constitutional units derived from a compound selected from decahydro-1,4:5,8-dimethanonaphthalene-2-methoxycarbonyl-6-methanol, decahydro-1,4:5,8-dimethanonaphthalene-2-methoxycarbonyl-7-methanol, 2-methyl-decahydro-1,4:5,8-dimethanonaphthalene-2-methoxycarbonyl-6-methanol, 2-methyl-decahydro-1,4:5,8-dimethanonaphthalene-2-methoxycarbonyl-7-methanol, 2-ethyl-decahydro-1,4:5,8-dimethanonaphthalene-2-methoxycarbonyl-6-methanol, and 2-ethyl-decahydro-1,4:5,8-dimethanonaphthalene-2-methoxycarbonyl-7-methanol.

The constitutional units of the general formulae (1) to (5) set forth above may be contained singly or a combination of two or more types thereof may be contained in the resin. In addition, the resin may further contain a constitutional unit of another polycarbonate resin along with the above-described constitutional units, or may further contain a constitutional unit of another resin (polyester resin, polyester carbonate resin, polyolefin resin) or the like.

Examples of the constitutional units of other polycarbonate resins include constitutional units derived from diols, such as 2,2'-[1,4-phenylenebis(methyleneoxy[1,1'-binaphthalene]-2',2-diyloxy)]di(ethan-1-ol) (DBHBNABHP) represented by the formula set forth below, spiroglycol (3,9-bis(1,1-dimethyl-2-hydroxyethyl)-2,4,8,10-tetraoxaspiro[5.5]undecane, SPG), bisphenol TMC, and bisphenol A.

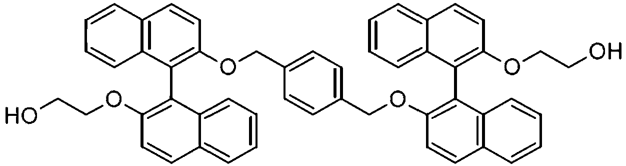

Examples of the constitutional units of polyester resins or polyester carbonate resins include constitutional units derived from dicarboxylic acids or ester derivatives thereof, such as terephthalic acid, naphthalenedicarboxylic acid, 9H-fluorene-9,9-dipropionic acid, or monoalkyl (methyl, ethyl, propyl, isopropyl, butyl) ester derivatives or dialkyl ester derivatives thereof (for example, 9,9-di(2-methoxycarbonylethyl)fluorene, 9,9-di(2-carboxyethyl)fluorene), 2,2'-bis(carboxymethoxy)-1,1'-binaphthyl, 2,2'-bis(carboxyethoxy)-1,1'-binaphthyl, 2,2'-bis(carboxyphenoxy)-1,1'-binaphthyl, and the compound represented by the formula set forth below.

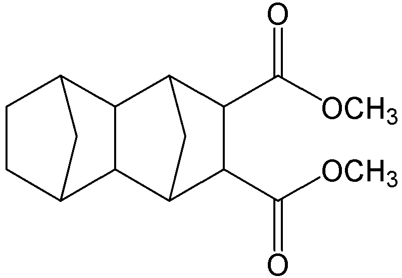

The resin having at least one constitutional unit selected from the group consisting of the general formulae (1) to (5) can be manufactured by, for example, performing a solution condensation method of a compound (diol) that derives the constitutional units represented by the general formulae (1) to (5) and a carbonic acid diester in the presence of a basic compound catalyst and/or a transesterification catalyst or without catalyst, thereby allowing them to undergo reaction. In this case, as described above, along with the compound (diol) that derives the constitutional units represented by the general formulae (1) to (5) and the carbonic acid diester, a compound that derives a constitutional unit of another polycarbonate resin, a compound that derives a constitutional unit of another resin (polyester resin, polyester carbonate resin, polyolefin resin), or the like can be used in combination.

When the resin that makes up the molding waste product includes a resin having at least one constitutional unit selected from the group consisting of the general formulae (1) to (5), the specific gravity of the molding waste product is in a suitable range (for example, preferably from 1.0 to 1.5, more preferably from 1.0 to 1.4, and still more preferably from 1.1 to 1.3), there are several advantages: entanglement of the molding waste product with each other can be suitably eliminated or mitigated by the vibration transport described below; such a resin is expensive, thus providing excellent economical efficiency; and others.

Note that the weight average molecular weight (Mw) of the resin having at least one constitutional unit selected from the group consisting of the general formulae (1) to (5) is not particularly limited, but is preferably in the range from 10,000 to 70,000, and more preferably from 15,000 to 50,000. A weight average molecular weight (Mw) of 10,000 or more is preferable because, for example, it can retain an appropriate strength when formed into a molded body, such as a resin for optical lenses. On the other hand, a weight average molecular weight (Mw) of 70,000 or less is preferable because it can retain an appropriate fluidity during resin molding and its moldability can be improved. Note that the term "weight average molecular weight (Mw)" as used herein means a weight average molecular weight in terms of polystyrene by gel permeation chromatography (GPC).

In one embodiment, the resin that makes up the molding waste product preferably includes an impurity resin having at least one constitutional unit selected from the group consisting of general formulae (6) to (8) set forth below. Note that the impurity resin having the constitutional unit is typically a cyclic polyolefin.

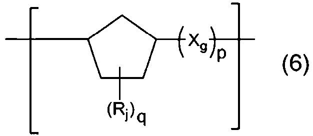

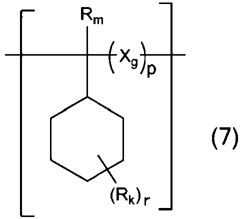

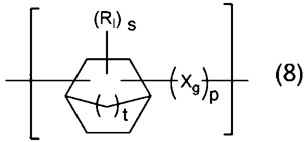

In the formulae set forth above, each X_{g} independently represents an alkylene group having 1 to 10 carbon atoms. Examples of the alkylene group having 1 to 10 carbon atoms include methylene, ethylene, propylene, isopropylene, butylene, isobutylene, sec-butylene, tert-butylene, and pentylene. Among them, methylene, ethylene, propylene, butylene, isobutylene, and sec-butylene are preferable, and methylene, ethylene, and propylene are more preferable.

Each of Rⱼ, Rₖ, and Rₗ is independently selected from a halogen atom, a substituted or unsubstituted alkyl group having 1 to 20 carbon atoms, a substituted or unsubstituted alkoxy group having 1 to 20 carbon atoms, a substituted or unsubstituted cycloalkyl group having 5 to 20 carbon atoms, a substituted or unsubstituted cycloalkoxy group having 5 to 20 carbon atoms, a substituted or unsubstituted aryl group having 6 to 20 carbon atoms, a substituted or unsubstituted heteroaryl group having 3 to 20 carbon atoms and containing one or more heterocyclic atoms selected from O, N, and S, a substituted or unsubstituted aryloxy group having 6 to 20 carbon atoms, and -C≡C-Rᵢ. Examples of Rⱼ, Rₖ, and Rₗ include those similar to Xₐ, X_{b}, X_{c}, X_{d}, Xₑ, and X_{f} described above.

However, Rⱼ, Rₖ, and Rₗ may have a substituent. The substituent is not particularly limited, and examples thereof include halogen atoms, alkyl groups having 1 to 10 carbon atoms, cycloalkyl groups having 5 to 10 carbon atoms, alkoxy groups having 1 to 10 carbon atoms, cycloalkyloxy groups having 5 to 10 carbon atoms, alkyloxycarbonyl groups having 2 to 10 carbon atoms, cycloalkyloxycarbonyl groups having 5 to 10 carbon atoms, aryloxycarbonyl groups having 7 to 15 carbon atoms, alkylcarbonyloxy groups having 2 to 10 carbon atoms, cycloalkylcarbonyloxy groups having 5 to 10 carbon atoms, arylcarbonyloxy groups having 7 to 15 carbon atoms, hydroxyalkylcarbonyl groups having 2 to 10 carbon atoms, glycidyloxycarbonyl group, hydroxy group, carboxy group, cyano group, and amide groups having 1 to 10 carbon atoms.

Examples of the alkyl group having 1 to 10 carbon atoms include methyl group, ethyl group, propyl group, isopropyl group, butyl group, isobutyl group, sec-butyl group, tert-butyl group, and pentyl group.

Examples of the cycloalkyl group having 5 to 10 carbon atoms include cyclopentyl group, cyclohexyl group, cycloheptyl group, bicyclo[2.2.1]heptyl group, and bicyclo[2.2.2]octyl group.

Examples of the alkoxy group having 1 to 10 carbon atoms include methoxy group, ethoxy group, propyloxy group, isopropyloxy group, butoxy group, isobutoxy group, sec-butoxy group, tert-butoxy group, and pentyloxy group.

Examples of the cycloalkyloxy group having 5 to 10 carbon atoms include cyclopentyloxy group, cyclohexyloxy group, bicyclo[2.2.1]heptyloxy group, and bicyclo[2.2.2]octyloxy group.

Examples of the alkyloxycarbonyl group having 2 to 10 carbon atoms include methyloxycarbonyl group, ethyloxycarbonyl group, propyloxycarbonyl group, isopropyloxycarbonyl group, butyloxycarbonyl group, isobutyloxycarbonyl group, sec-butyloxycarbonyl group, and tert-butyloxycarbonyl group.

Examples of the cycloalkyloxycarbonyl group having 5 to 10 carbon atoms include cyclopentyloxycarbonyl group, cyclohexyloxycarbonyl, bicyclo[2.2.1]heptyloxycarbonyl group, and bicyclo[2.2.2]octyloxycarbonyl group.

Examples of the aryloxycarbonyl group having 7 to 15 carbon atoms include phenyloxycarbonyl group, tolyloxycarbonyl group, xylyloxycarbonyl group, trimethylphenyloxycarbonyl group, tetramethylphenyloxycarbonyl group, ethylphenyloxycarbonyl group, ethylmethylphenyloxycarbonyl group, diethylphenyloxycarbonyl group, and naphthyloxycarbonyl group.

Examples of the alkylcarbonyloxy group having 2 to 10 carbon atoms include methylcarbonyloxy group, ethylcarbonyloxy group, propylcarbonyloxy group, isopropylcarbonyloxy group, and butylcarbonyloxy group.

Examples of the cycloalkylcarbonyloxy group having 5 to 10 carbon atoms include cyclopentylcarbonyloxy group, cyclohexylcarbonyloxy group, bicyclo[2.2.1]heptylcarbonyloxy group, and bicyclo[2.2.2]octylcarbonyloxy group.

Examples of the arylcarbonyloxy group having 7 to 15 carbon atoms include phenylcarbonyloxy group, tolylcarbonyloxy group, xylylcarbonyloxy group, trimethylphenylcarbonyloxy group, tetramethylphenylcarbonyloxy group, ethylphenylcarbonyloxy group, ethylmethylphenylcarbonyloxy group, diethylphenylcarbonyloxy group, and naphthylcarbonyloxy group.

Examples of the hydroxyalkylcarbonyl group having 2 to 10 carbon atoms include hydroxymethylcarbonyl group, hydroxyethylcarbonyl group, and hydroxypropylcarbonyl group.

Examples of the amide group having 1 to 10 carbon atoms include methylaminocarbonyl group, ethylaminocarbonyl group, dimethylaminocarbonyl group, and acetylamino group.

The above-mentioned substituents may be included singly or a combination of two or more types thereof may be included.

Rᵢ represents an aryl group having 6 to 20 carbon atoms or a heteroaryl group having 3 to 20 carbon atoms and containing one or more heterocyclic atoms selected from O, N, and S. The above-mentioned Rᵢ is the same as described above.

Each p independently represents an integer of 0 or 1.

Each of q, r, and s independently represents an integer from 0 to 10, preferably from 0 to 5, and more preferably from 0 to 3.

The subscript t represents an integer from 1 to 3 and is preferably 1 or 2.

Here, when q is 2 or more and two Rⱼ's are present at adjacent carbon atoms, the two Rⱼ's may be bound together to form a ring structure. For example, when q is 2 and two Rⱼ's are both substituted or unsubstituted alkyl groups, the general formula (6) may be the formula (6-1) described below, and when q is 2 and two Rⱼ's are a substituted or unsubstituted alkyl and a substituted or unsubstituted cycloalkyl, the general formula (6) may be the formula (6-2), (6-3), or (6-4) described below.

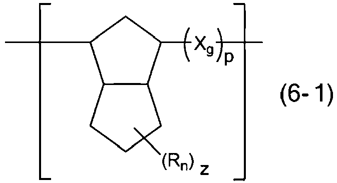

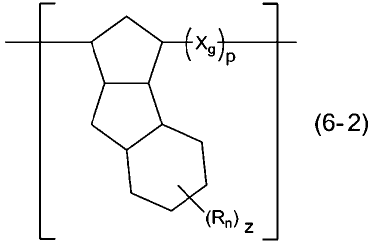

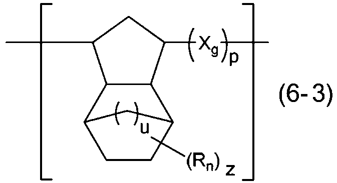

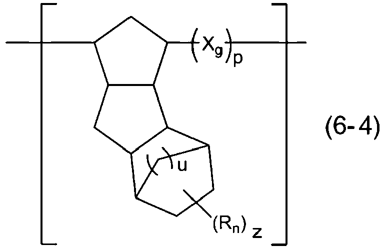

In the formulae set forth above, X_{g} and p are as mentioned above.

Rₙ represents the above-mentioned substituent, and specific examples thereof include halogen atoms, alkyl groups having 1 to 10 carbon atoms, cycloalkyl groups having 5 to 10 carbon atoms, alkoxy groups having 1 to 10 carbon atoms, cycloalkyloxy groups having 5 to 10 carbon atoms, alkyloxycarbonyl groups having 2 to 10 carbon atoms, cycloalkyloxycarbonyl groups having 5 to 10 carbon atoms, aryloxycarbonyl groups having 7 to 15 carbon atoms, alkylcarbonyloxy groups having 2 to 10 carbon atoms, cycloalkylcarbonyloxy groups having 5 to 10 carbon atoms, arylcarbonyloxy groups having 7 to 15 carbon atoms, hydroxyalkylcarbonyl groups having 2 to 10 carbon atoms, glycidyloxycarbonyl group, hydroxy group, carboxy group, cyano group, and amide groups having 1 to 10 carbon atoms.

The subscript z is not particularly limited, but is preferably from 0 to 6, more preferably from 0 to 3, and still more preferably 0 or 1.

The subscript u represents an integer from 1 to 3, and is preferably 1 or 2.

When r is 2 or more and two Rₖ's are present at adjacent carbon atoms, the two Rₖ's may be bound together to form a ring structure. For example, when r is 2 and two Rₖ's are both substituted or unsubstituted alkyl groups, the general formula (7) may be the formula (7-1) or (7-2) set forth below, and when r is 2 and two Rₖ's are a substituted or unsubstituted alkyl and a substituted or unsubstituted cycloalkyl, the general formula (7) may be the formula (7-3) set forth below.

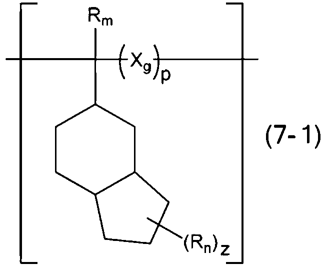

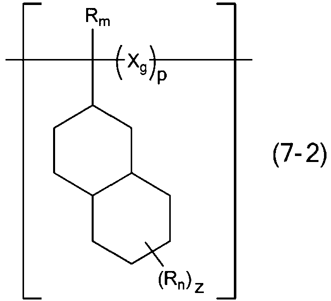

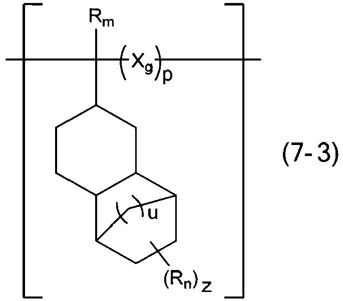

In the formulae set forth above, X_{g}, p, Rₙ, z, and u are as mentioned above.

Furthermore, when s is 2 or more and two Rₗ's are present at adjacent carbon atoms, the two Rₗ's may be bound together to form a ring structure. For example, when s is 2 and two Rₗ's are both substituted or unsubstituted alkyl groups, the general formula (8) may be the formula (8-1) or (8-2) set forth below, and when s is 2 and two Rₗ's are a substituted or unsubstituted alkyl and a substituted or unsubstituted cycloalkyl, the general formula (8) may be the formula (8-3) or (8-4) set forth below.

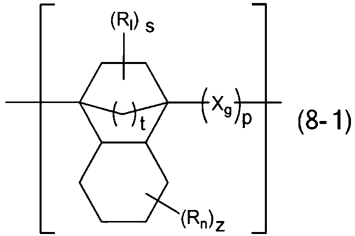

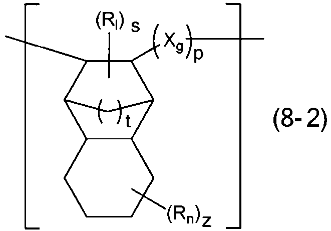

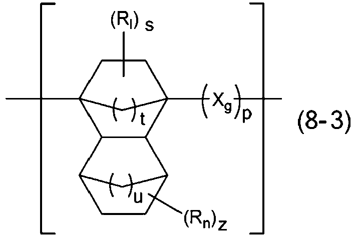

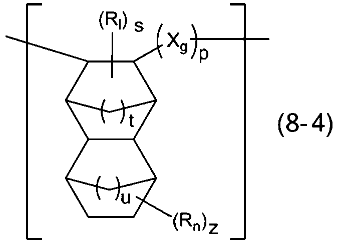

In the formulae set forth above, X_{g}, p, Rₙ, z, and u are as mentioned above.

Rₘ represents a hydrogen atom or an alkyl group having 1 to 3 carbon atoms. The alkyl group having 1 to 3 carbon atoms is not particularly limited, and examples thereof include methyl group, ethyl group, propyl group, and isopropyl group.

Specific examples of the impurity resin include those containing at least one selected from the group consisting of constitutional units represented by formulae 1 to 8 set forth below.

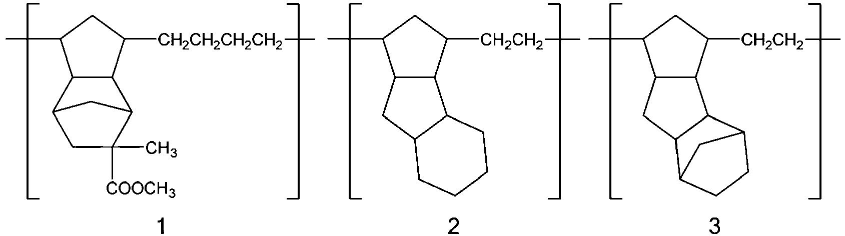

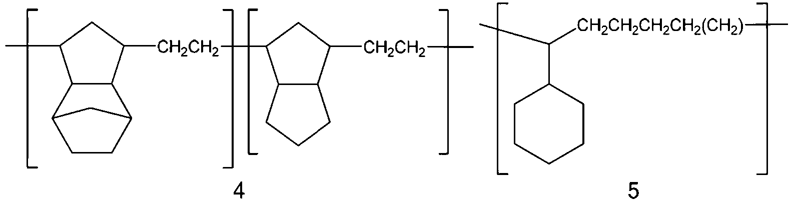

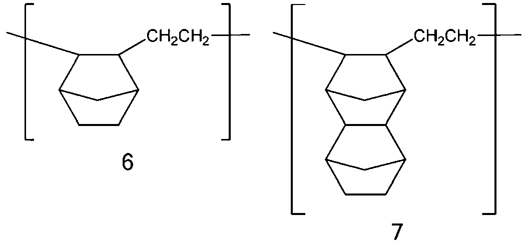

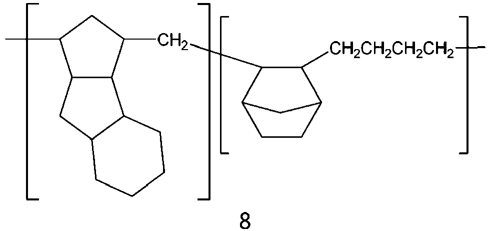

The above-described constitutional unit may be contained singly or a combination of two or more types thereof may be contained in the impurity resin. In addition, the above-mentioned constitutional unit may be combined with a constitutional unit of another cyclic polyolefin, or may be combined with a constitutional unit of another resin (polyolefin resin, polyester resin) or the like.

The impurity resin having at least one constitutional unit selected from the group consisting of the general formulae (6) to (8) can be manufactured by, for example, polymerizing a compound (cyclic olefin) that derives the constitutional units represented by the general formulae (6) to (8). In this case, as described above, along with the compound that derives the constitutional units represented by the general formulae (6) to (8), a compound that derives a constitutional unit of another cyclic polyolefin, a compound that derives a constitutional unit of another resin (polyolefin resin, polyester resin), or the like can be used in combination.

In one preferable embodiment, the impurity resin having at least one constitutional unit selected from the group consisting of the general formulae (6) to (8) set forth above is used in combination with a resin having at least one constitutional unit selected from the group consisting of the general formulae (1) to (5) set forth above. There are several advantages: the relatively expensive resin having at least one constitutional unit selected from the group consisting of the general formulae (1) to (5) is recycled to manufacture a recycled resin, and the relatively inexpensive resin having at least one constitutional unit selected from the group consisting of the general formulae (6) to (8) is used as an impurity resin to separate them, thus providing excellent economical efficiency; and others.

Also, in another preferable embodiment, the impurity resin having at least one constitutional unit selected from the group consisting of the general formulae (6) to (8) set forth above is used in combination with a resin having at least one constitutional unit selected from the group consisting of general formulae (9) to (11) set forth below. There are several advantages: the relatively expensive resin having at least one constitutional unit selected from the group consisting of the general formulae (9) to (11) is recycled to manufacture a recycled resin, and the relatively inexpensive resin having at least one constitutional unit selected from the group consisting of the general formulae (6) to (8) is used as an impurity resin to separate them, thus providing excellent economical efficiency; and others.

Note that, the weight average molecular weight (Mw) of the impurity resin is not particularly limited, but is preferably in the range from 1,000 to three million, more preferably from 10,000 to three million, still more preferably from 20,000 to one million, and particularly preferably from 30,000 to 500,000. An impurity resin having a weight average molecular weight (Mw) of 1,000 or more is preferable because its separation is facilitated. On the other hand, an impurity resin having a weight average molecular weight (Mw) of three million or less is preferable because it is less likely to be a generation source of gel impurities when the recycled resin is contaminated with a trace amount of the impurity resin.

In one embodiment, the resin that makes up the molding waste product preferably includes a resin having at least one constitutional unit selected from the group consisting of general formulae (9) to (11) set forth below. Note that the general formula (9) represents 9,9-bis(carboxyalkyl)fluorenes, the general formula (10) represents 9,9-bis(carboxyalkyl)-diarylfluorenes, and the general formula (11) represents 9,9-bis(carboxyalkyl)-dinaphthylfluorenes.

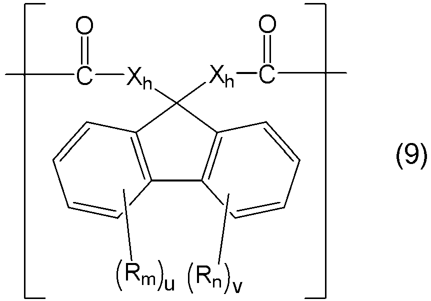

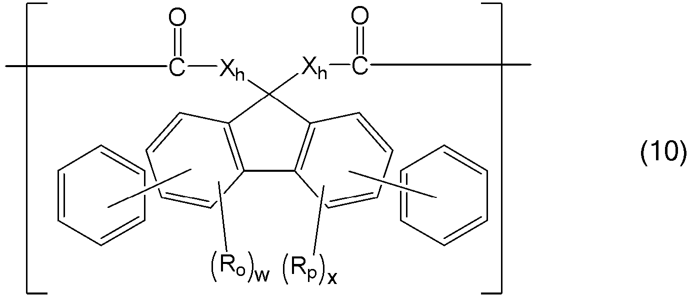

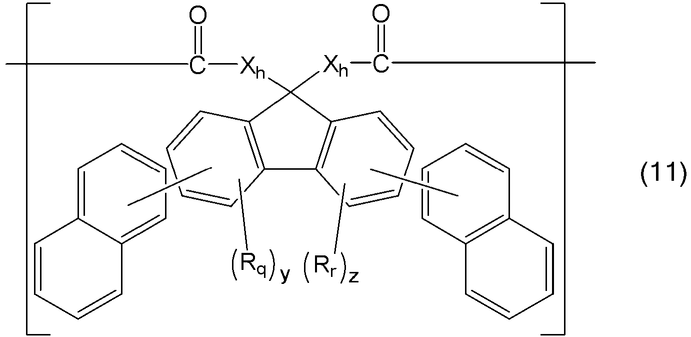

In the formulae set forth above, each Xₕ independently represents an alkylene group having 1 to 8 carbon atoms. Examples of the alkylene group having 1 to 8 carbon atoms include methylene, ethylene, propylene, isopropylene, butylene, isobutylene, sec-butylene, tert-butylene, and pentylene. Among them, Xₕ is preferably methylene, ethylene, propylene, butylene, isobutylene, or sec-butylene, more preferably methylene, ethylene, or propylene, still more preferably methylene or ethylene, and particularly preferably ethylene.

Rₘ, Rₙ, Rₒ, Rₚ, R_{q}, and Rᵣ are each independently selected from a halogen atom, a cyano group, and a substituted or unsubstituted alkyl group having 1 to 6 carbon atoms.

Examples of the halogen atom include fluorine atom, chlorine atom, bromine atom, and iodine atom.

Examples of the alkyl group having 1 to 6 carbon atoms include methyl group, ethyl group, propyl group, isopropyl group, butyl group, isobutyl group, sec-butyl group, tert-butyl group, pentyl group, and hexyl group. In this case, the alkyl group having 1 to 6 carbon atoms may have a substituent. The substituent is not particularly limited, and examples thereof include halogen atoms, hydroxy group, carboxy group, and cyano group. These substituents may be included singly or a combination of two or more types thereof may be included.

u, v, w, x, y, and z each independently represent an integer from 0 to 2, and are preferably from 0 to 1.

Specific examples of the constitutional units represented by the formula (9) include constitutional units derived from 9,9-bis(carboxy-C2-6 alkyl)fluorenes, preferably 9,9-bis(carboxy-C2-4 alkyl)fluorenes, and more preferably 9,9-bis(carboxy-C2-3 alkyl)fluorenes. In this case, the compounds that derive the constitutional units may be alkyl esters, acid halides, or acid anhydrides. For example, the constitutional units represented by the formula (9) may be constitutional units derived from 9,9-bis(2-carboxyethyl)fluorene, 9,9-bis(2-carboxypropyl)fluorene, and alkyl esters, acid halides and acid anhydrides thereof, and preferably constitutional units derived from compounds selected from 9,9-bis(2-carboxyethyl)fluorene, and alkyl esters, acid halides and acid anhydrides thereof.

Specific examples of the constitutional units represented by the formula (10) include 9,9-bis(carboxy-C2-6 alkyl)-diphenylfluorenes. In this case, the compounds that derive the constitutional units may be alkyl esters, acid halides, or acid anhydrides. For example, the constitutional units represented by the formula (10) may be constitutional units derived from compounds selected from 9,9-bis(2-carboxyethyl)-1,8-diphenylfluorene, 9,9-bis(2-carboxyethyl)-2,7-diphenylfluorene, 9,9-bis(2-carboxyethyl)-3,6-diphenylfluorene, 9,9-bis(2-carboxyethyl)-4,5-diphenylfluorene, 9,9-bis(2-carboxypropyl)-2,7-diphenylfluorene, and alkyl esters, acid halides and acid anhydrides thereof.

Specific examples of the constitutional units represented by the formula (11) include constitutional units derived from 9,9-bis(carboxy-C2-6 alkyl)-dinaphthylfluorenes. In this case, the compounds that derive the constitutional units may be alkyl esters, acid halides, or acid anhydrides. For example, the constitutional units represented by the formula (11) may be constitutional units derived from compounds selected from 9,9-bis(2-carboxyethyl)-1,8-di(2-naphthyl)fluorene, 9,9-bis(2-carboxyethyl)-2,7-di(2-naphthyl)fluorene, 9,9-bis(2-carboxyethyl)-3,6-di(2-naphthyl)fluorene, 9,9-bis(2-carboxyethyl)-4,5-di(2-naphthyl)fluorene, 9,9-bis(2-carboxypropyl)-2,7-di(2-naphthyl)fluorene, 9,9-bis(2-carboxyethyl)-2,7-di(1-naphthyl)fluorene, and alkyl esters, acid halides and acid anhydrides thereof.

The resin having at least one constitutional unit selected from the group consisting of the general formulae (9) to (11) usually contains a constitutional unit derived from a diol, along with the constitutional units of the general formulae (9) to (11) set forth above.

Examples of the diol include compounds that derive the constitutional units represented by the general formulae (1) to (5) described above, compounds that derive the constitutional units of other polycarbonate resins, and alkylene glycols.

Examples of the compounds that derive the constitutional unit represented by the general formula (1) include 2,2'-bis(1-hydroxymethoxy)-1,1'-binaphthalene, 2,2'-bis(2-hydroxyethoxy)-1,1'-binaphthalene (BNE), 2,2'-bis(2-hydroxyethoxy)-6,6'-diphenyl-1,1'-binaphthalene (DP), 2,2'-bis(3-hydroxypropyloxy)-1,1'-binaphthalene, and 2,2'-bis(4-hydroxybutoxy)-1,1'-binaphthalene.

Examples of the compounds that derive the constitutional unit represented by the general formula (2) include 9,9-bis[4-(2-hydroxyethoxy)phenyl]fluorene (BPEF), 9,9-bis(4-hydroxyphenyl)fluorene, 9,9-bis[4-(2-hydroxyethoxy)-3-methylphenyl]fluorene, 9,9-bis[4-(2-hydroxyethoxy)-3-tert-butylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, and 9,9-bis[4-(2-hydroxyethoxy)-3-phenylphenyl]fluorene (BPPEF).

Examples of the compounds that derive the constitutional unit represented by the general formula (3) include 9,9-bis[6-(1-hydroxymethoxy)naphthalen-2-yl]fluorene (BNEF), 9,9-bis[6-(2-hydroxyethoxy)naphthalen-2-yl]fluorene, 9,9-bis[6-(3-hydroxypropoxy)naphthalen-2-yl]fluorene, and 9,9-bis[6-(4-hydroxybutoxy)naphthalen-2-yl]fluorene.

Examples of the compounds that derive the constitutional unit represented by the general formula (4) include (decahydro-1,4:5,8-dimethanonaphthalene-2,6-diyl)dimethanol, (decahydro-1,4:5,8-dimethanonaphthalene-2,7-diyl)dimethanol, (2-methyldecahydro-1,4:5,8-dimethanonaphthalene-2,6-diyl)dimethanol, (2-methyldecahydro-1,4:5,8-dimethanonaphthalene-2,7-diyl)dimethanol, (2-ethyldecahydro-1,4:5,8-dimethanonaphthalene-2,6-diyl)dimethanol, and (2-ethyldecahydro-1,4:5,8-dimethanonaphthalene-2,7-diyl)dimethanol.

Examples of the compounds that derive the constitutional unit represented by the general formula (5) include decahydro-1,4:5,8-dimethanonaphthalene-2-methoxycarbonyl-6-methanol, decahydro-1,4:5,8-dimethanonaphthalene-2-methoxycarbonyl-7-methanol, 2-methyl-decahydro-1,4:5,8-dimethanonaphthalene-2-methoxycarbonyl-6-methanol, 2-methyl-decahydro-1,4:5,8-dimethanonaphthalene-2-methoxycarbonyl-7-methanol, 2-ethyl-decahydro-1,4:5,8-dimethanonaphthalene-2-methoxycarbonyl-6-methanol, and 2-ethyl-decahydro-1,4:5,8-dimethanonaphthalene-2-methoxycarbonyl-7-methanol.

Examples of the compounds that derive the constitutional units of other polycarbonate resins include 2,2'-[1,4-phenylenebis(methyleneoxy[1,1'-binaphthalene]-2',2-diyloxy)]di(ethan-1-ol) (DBHBNABHP), spiroglycol (3,9-bis(1,1- dimethyl-2-hydroxyethyl)-2,4,8,10-tetraoxaspiro[5.5]undecane, SPG), bisphenol TMC, and bisphenol A.

Examples of the alkylene glycols include ethylene glycol, propylene glycol, butylene glycol, pentylene glycol, neopentyl glycol, and octylene glycol.

Also, the resin having at least one constitutional unit selected from the group consisting of the general formulae (9) to (11) may further contain a constitutional unit of another resin (polyester resin, polyester carbonate resin, polyolefin resin) or the like, along with the above-described constitutional units.

The resin having at least one constitutional unit selected from the group consisting of the general formulae (9) to (11) can be manufactured by, for example, allowing a compound (carboxylic acid, alkyl ester, acid halide, acid anhydride) that derives the constitutional units represented by the general formulae (9) to (11) and a diol to undergo reaction. In this case, as described above, along with the compound (carboxylic acid, alkyl ester, acid halide, acid anhydride) that derives the constitutional units represented by the general formulae (9) to (11) and the diol, a compound that derives a constitutional unit of another resin (polyester resin, polyester carbonate resin, polyolefin resin) or the like can be used in combination.

When the resin that makes up the molding waste product includes a resin having at least one constitutional unit selected from the group consisting of the general formulae (9) to (11), the specific gravity of the molding waste product is in a suitable range (for example, preferably from 1.0 to 1.5, more preferably from 1.0 to 1.4, and still more preferably from 1.1 to 1.3), there are several advantages: entanglement of the molding waste product with each other can be suitably eliminated or mitigated by the vibration transport described below; such a resin is expensive, thus providing excellent economical efficiency; and others.

Note that the weight average molecular weight (Mw) of the resin having at least one constitutional unit selected from the group consisting of the general formulae (9) to (11) is not particularly limited, but is preferably in the range from 10,000 to 70,000, and more preferably from 15,000 to 50,000. A weight average molecular weight (Mw) of 10,000 or more is preferable because, for example, it can retain an appropriate strength when formed into a molded body, such as a resin for optical lenses. On the other hand, a weight average molecular weight (Mw) of 70,000 or less is preferable because it can retain an appropriate fluidity during resin molding and its moldability can be improved.

The content of the molding waste product is preferably 30% by mass or more, more preferably 40% by mass or more, still more preferably 50% by mass or more, and particularly preferably from 50 to 100% by mass with respect to the total mass of the waste product composition.

In one embodiment, the content of the resin having at least one constitutional unit selected from the group consisting of the general formulae (1) to (5) is preferably 80% by mass or more, and more preferably from 80 to 99% by mass with respect to the total mass of the waste resin composition. The content of the resin of 80% by mass or more is preferable because the recycling efficiency is increased.

In one embodiment, the content of the impurity resin having at least one constitutional unit selected from the group consisting of the general formulae (6) to (8) is preferably 50% by mass or less, more preferably in the range from 0.001 to 50% by mass, still more preferably from 0.01 to 0% by mass, and particularly preferably from 0.1 to 20% by mass with respect to the total mass of the waste resin composition. The content of the impurity resin of 50% by mass or less is preferable because the recycling efficiency is increased.

In one embodiment, the content of the resin having at least one constitutional unit selected from the group consisting of the general formulae (9) to (11) is preferably 80% by mass or more, and more preferably from 80 to 99% by mass with respect to the total mass of the waste resin composition. The content of the resin of 80% by mass or more is preferable because the recycling efficiency is increased.

The additive that makes up the molding waste product is not particularly limited, and any known additive may be used.

Also, examples of the decomposition products of resin that make up the molding waste product include: monomers, dimers, copolymers, and oligomers of the resin or impurity resin having at least one constitutional unit selected from the group consisting of the general formulae (1) to (11), aryl alcohols (such as phenols), carbonic acid diesters (such as diphenyl carbonates), monomer-modified products (such as formulae (A-1) and (A-2) set forth below), and resin modified products having a moiety represented by the formula (B-1) or (B-2) set forth below, or the like.

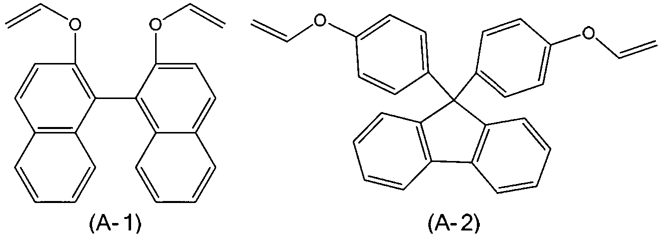

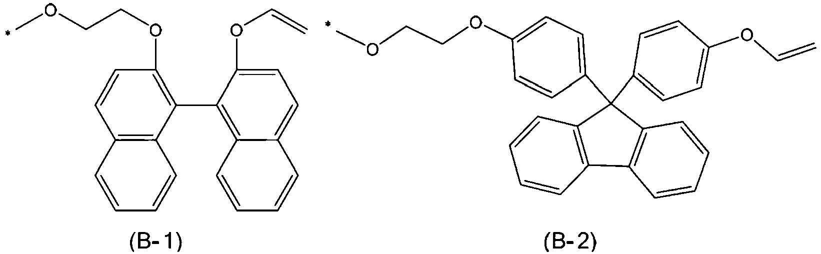

### <Vibration transport bed>

The vibration transport bed is not particularly limited as long as it can eliminate or mitigate entanglement of the molding waste product having a runner part contained in the waste product composition with each other by vibration-transporting the waste product composition. Specifically, the vibration transport bed may be a plate member, may be a conveyor, may be a turntable, or may be of any other shape, but it is preferably a plate member or a conveyor, and more preferably a conveyor. In this case, the size of the vibration transport bed may be appropriately set. Also, the vibration transport bed may be installed parallel to the horizontal plane or may be installed inclined.

When the vibration transport bed is a plate member, a conveyor, or the like, the width of the vibration transport bed is preferably from 5 cm to 5 m, more preferably from 10 cm to 3 m, and still more preferably from 20 cm to 1 m.

Also, the length of the vibration transport bed is preferably from 50 cm to 30 m, more preferably from 1 to 10 m, and still more preferably from 1 to 5 m.

The vibration transport bed is usually accompanied by a vibration mechanism (for example, induction motor, resonator, vibration motor, or the like).

In addition to the above, the vibration transport bed may be further accompanied by a feeder for supplying the waste product composition to the vibration transport bed, a vibration control mechanism for controlling the vibration mechanism (constant drive, intermittent drive, variable speed drive, or the like), a discharge mechanism for taking out the waste product composition after the vibration transport bed, and the like.

### <Vibration transport>

By vibration-transporting the waste product composition on the vibration transport bed, entanglement of the molding waste product having a runner part contained in the waste product composition with each other can be eliminated or mitigated.

The vibration frequency of the vibration transport bed is preferably from 1 to 1,000 Hz, more preferably from 5 to 500 Hz, still more preferably from 10 to 100 Hz, and still more preferably from 30 to 80 Hz. The vibration frequency of the vibration transport bed in the above-mentioned range is preferable because the entanglement is easily eliminated, the amount of energy used is reduced, and the operation efficiency is better.

The amount of the waste product composition supplied is preferably from 100 to 5,000 g/m with respect to the width of the vibration transport bed, more preferably from 100 to 2,000 g/m, still more preferably from 100 to 1,500 g/m in terms of being able to effectively eliminate or mitigate the entanglement, particularly preferably from 100 to 1,000 g/m, and most preferably from 500 to 1,000 g/m in terms of high manufacturing efficiency.

The supply rate of the waste product composition to the vibration transport bed is preferably from 5 to 100 g/sec, preferably from 5 to 60 g/sec, more preferably from 5 to 40 g/sec in terms of being able to effectively eliminate or mitigate the entanglement, and still more preferably from 15 to 40 g/sec in terms of manufacturing efficiency.

In one embodiment, it is preferable that the amount of the waste product composition supplied is from 100 to 2,000 g/m with respect to the width of the vibration transport bed and the supply rate of the waste product composition to the vibration transport bed is from 5 to 40 g/sec, it is more preferable that the amount supplied is from 100 to 1,500 g/m and the supply rate is from 5 to 40 g/sec, and it is more preferable that the amount supplied is from 500 to 1,000 g/m and the supply rate is from 15 to 40 g/sec.

### 2. Step (2)

The step (2) is a step in which a recycled resin is obtained from the vibration-transported waste product composition. Since the waste product composition is obtained from the step (1), the entanglement of the molding waste product having a runner part contained in the waste product composition has been eliminated or mitigated. Therefore, a recycled resin can be manufactured from the waste product composition with high recycling efficiency in the step (2).

The step (2) is not particularly limited as long as a recycled resin can be obtained from the vibration-transported waste product composition, and any known method can be appropriately employed. In one preferable embodiment, the step (2) includes a step (2-1) in which the waste product composition is comminuted, a step (2-2) in which an impurity contained in the waste product composition is removed, and a step (2-3) in which a recycled resin is manufactured.

### <Step (2-1)>

The step (2-1) is a step in which the waste product composition is comminuted.

The waste product composition can be made into a shape suited for recycling by comminution.

The comminution method is not particularly limited, and there may be adopted any method out of compression, impact, shearing, and friction.

Examples of comminutors that can be used include: coarse crushers (jaw crusher, gyratory crusher, impact crusher, uniaxial crusher, biaxial crusher, etc.); secondary crushers (roll crusher, edge runner, disintegrator, semi-autogenous grinding (SAG) mill, crushing roll, hammer mill, roller mill, etc.); fine comminutors (bead mill, ball mill, vibration ball mill, rod mill, jet mill, planetary mill, etc.) Among them, a coarse crusher is preferably used, and a uniaxial crusher or a biaxial crusher is more preferably used. Specific examples of comminutors include Powerful crushers 35-560, 35-720, 55-770, and 55-1050 (manufactured by TANAKA Co., ltd.), and Low speed granulators KGA-250 and KGA-350 (manufactured by KAWATA MFG. CO., LTD.). Note that, the above-mentioned comminutors may be used singly or in combination of two or more types thereof.

Since the entanglement of the molding waste product having a runner part contained in the waste product composition with each other has been eliminated or mitigated in the step (1), the waste product composition can be efficiently put into a comminutor.

### <Step (2-2)>

The step (2-2) is a step in which an impurity contained in the waste product composition is removed. The molding waste product contained in the waste product composition may contain two or more types of resins. In addition to the above, the waste product composition may also contain an additive, decomposition products of resin, decomposition products of additive, and the like. In terms of manufacturing a recycled resin with excellent physical properties, it is preferable to remove the impurity from the waste product composition.

The removal of the impurity contained in the waste product composition is not particularly limited, and examples thereof include a method in which the difference in physical properties between the target resin and the impurity is utilized, and a method in which the difference in chemical properties between the target resin and the impurity is utilized.

Examples of the method in which the difference in physical properties between the target resin and the impurity is utilized include a method using magnetic force, a method using wind force, a method using a sieve, a method using specific gravity, and a method using buoyancy.

For example, when the impurity is a metal, the impurity can be removed by a method using magnetic force. Specifically, the use of a magnet or a metal detector can remove the metal that may be contained in the waste product composition.

Besides, other methods can be applied, such as a method of removing the impurity utilizing the difference in buoyancy using salt water, a method of removing the impurity utilizing the difference in adsorption power using activated carbon, and a method of removing the impurity utilizing the difference in specific gravity using a hydrocyclone treatment.

Examples of the method in which the difference in chemical properties between the target resin and the impurity is utilized include a method in which the target resin is depolymerized.

For example, the resin having at least one constitutional unit selected from the group consisting of the general formulae (1) to (4) set forth above can be treated with an alkaline aqueous solution and depolymerized, thereby obtaining at least one dihydroxy compound (depolymerized monomer) selected from the group consisting of general formulae (1') to (4') set forth below.

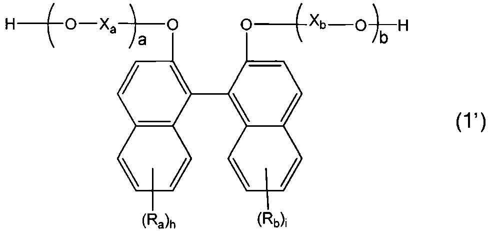

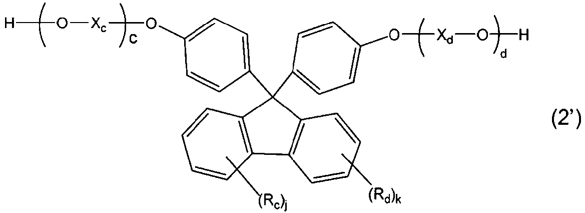

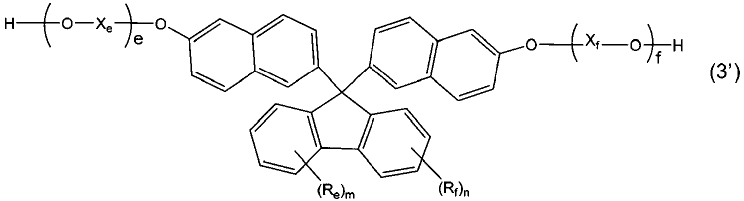

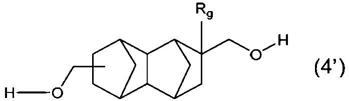

Also, for example, the resin having at least one constitutional unit selected from the group consisting of the general formulae (9) to (11) set forth above can be treated with an alkaline aqueous solution and depolymerized, thereby obtaining at least one dicarboxylic acid compound (depolymerized monomer) selected from the group consisting of general formulae (9') to (11') set forth below.

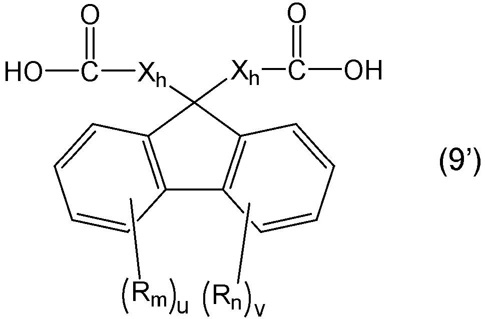

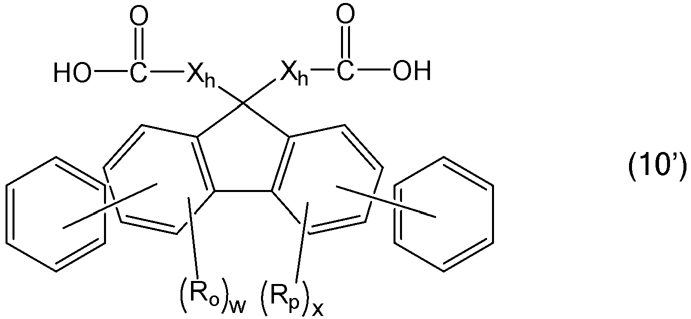

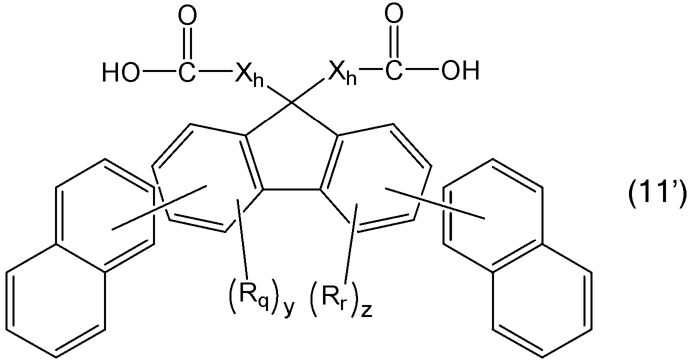

On the other hand, the impurity resin having at least one constitutional unit selected from the group consisting of the general formulae (6) to (8) is not depolymerized when treated with an alkaline aqueous solution.

Therefore, if the waste product composition contains the resin having at least one constitutional unit selected from the group consisting of the general formulae (1) to (4) and the impurity resin having at least one constitutional unit selected from the group consisting of the general formulae (6) to (8), only the resin having at least one constitutional unit selected from the group consisting of the general formulae (1) to (4) will be depolymerized when treated with an alkaline aqueous solution.

Also, if the waste product composition contains the resin having at least one constitutional unit selected from the group consisting of the general formulae (9) to (11) and the impurity resin having at least one constitutional unit selected from the group consisting of the general formulae (6) to (8), only the resin having at least one constitutional unit selected from the group consisting of the general formulae (9) to (11) will be depolymerized when treated with an alkaline aqueous solution.

The resulting dihydroxy compound (depolymerized monomer) is very different in physical properties from the impurity resin having at least one constitutional unit selected from the group consisting of the general formulae (6) to (8), and the impurity resin can thus be removed.

Note that the alkali treatment is not particularly limited and can be performed by any known method. For example, the alkali treatment can be performed by adding the waste product composition and an alkaline aqueous solution to a reaction solvent and allowing them to undergo reaction.

The reaction solvent is not particularly limited, and examples thereof include aliphatic hydrocarbon-based solvents and aromatic hydrocarbon-based solvents.

The aliphatic hydrocarbon-based solvent is not particularly limited, and examples thereof include pentane, hexane, heptane, octane, nonane, decane, cyclohexane, and cyclodecane.

The aromatic hydrocarbon-based solvent is not particularly limited, and examples thereof include toluene, xylene, and mesitylene.

Among them, the reaction solvent is preferably an aromatic hydrocarbon-based solvent, and more preferably toluene or xylene. Note that the above-mentioned reaction solvent may be used singly or a combination of two or more types thereof may be used.

The amount of the reaction solvent used is not particularly limited, but is preferably in the range from 30 to 2,000 parts by mass, more preferably from 40 to 1,500 parts by mass, and still more preferably from 100 to 1,000 parts by mass with respect to 100 parts by mass of the waste product composition. The use of the reaction solvent in an amount of 30 parts by mass or more is preferable because the organic component in the waste product composition is sufficiently dissolved in the reaction solvent and the reaction efficiency is increased. On the other hand, the use of the reaction solvent in an amount of 2,000 parts by mass or less is preferable because the reaction time is shortened.

Also, the alkaline aqueous solution contains a metal oxide and water.

The metal oxide is not particularly limited, but examples thereof include: alkali metals, such as sodium hydroxide, potassium hydroxide, and rubidium hydroxide; and alkaline earth metals, such as calcium hydroxide and barium hydroxide. Among them, the metal oxide is preferably an alkali metal, more preferably sodium hydroxide or potassium hydroxide, and still more preferably potassium hydroxide. Note that, single kind of these metal oxides may be used or a combination of two or more types thereof may be used.

The amount of the metal oxide used is not particularly limited, but is preferably in the range from 1.5 to 10 mol, more preferably from 2 to 8 mol, and still more preferably from 2 to 4 mol with respect to 1 mol of the carbonate bond in the polycarbonate resin. The use of the metal oxide in an amount of 1.5 mol or more is preferable because the depolymerization is sufficiently carried out. On the other hand, the use of the metal oxide in an amount of 10 mol or less is preferable because the production cost is reduced.

The concentration of the metal oxide in the alkaline aqueous solution is preferably in the range from 10 to 60% by mass, more preferably from 15 to 55% by mass, and still more preferably from 20 to 50% by mass with respect to the total mass of the aqueous alkaline solution. The concentration of the metal oxide of 10% by mass or more is preferable because the depolymerization reaction rate increases. On the other hand, the concentration of the metal oxide of 60% by mass or less is preferable because the alkaline aqueous solution does not become a slurry and the reaction progresses more easily.

The treatment temperature (depolymerization reaction temperature) is not particularly limited, but is preferably 120°C or lower, more preferably 100°C or lower, and still more preferably in the range from 30 to 90°C. The treatment temperature of 120°C or lower is preferable because side reactions can be prevented.

### <Step (2-3)>

The step (2-3) is a step in which a recycled resin is manufactured.

When the impurity is removed by the method in which the difference in physical properties between the target resin and the impurity is utilized in the step (2-2), there is no change in the configuration of the target resin, and therefore, the resin obtained by removing the impurity is the recycled resin.

On the other hand, when the impurity is removed by the method in which the difference in chemical properties between the target resin and the impurity is utilized, the depolymerized monomer of the target resin can be polymerized to manufacture the recycled resin. In this case, the recycled resin to be manufactured may be the same as or different from the target resin contained in the waste product composition.

The method of polymerizing the depolymerized monomer of the target resin to manufacture the recycled resin is not particularly limited, and such manufacturing may be performed by any known methods. For example, when the depolymerized monomer is at least one dihydroxy compound selected from the group consisting of the general formulae (1') to (4') set forth above, the recycled resin can be manufactured by performing a solution condensation method of the dihydroxy compound and a carbonic acid diester in the presence of a basic compound catalyst and/or a transesterification catalyst or without catalyst.

The carbonic acid diester is not particularly limited, and examples thereof include diphenyl carbonate, ditriel carbonate, bis(chlorophenyl) carbonate, m-cresyl carbonate, dimethyl carbonate, diethyl carbonate, dibutyl carbonate, and dicyclohexyl carbonate. Among them, diphenyl carbonate is preferable.

The amount of the carbonic acid diester compound used is preferably in the range from 0.97 to 1.20 mol, more preferably from 0.98 to 1.10 mol, and still more preferably from 1.00 to 1.10 mol with respect to 1 mol of the dihydroxy compound.

The basic compound catalyst is not particularly limited, and examples thereof include alkali metal compounds, alkaline earth metal compounds, and nitrogen-containing compounds.

The alkali metal compound is not particularly limited, and examples thereof include organic acid salts, inorganic salts, oxides, hydroxides, hydrides, and alkoxides of alkali metals. Specific examples thereof include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylborate, sodium benzoate, potassium benzoate, cesium benzoate, lithium benzoate, disodium hydrogen phosphate, dipotassium hydrogen phosphate, dilithium hydrogen phosphate, disodium phenyl phosphate, disodium salts, dipotassium salts, dicesium salts or dilithium salts of bisphenol A, and sodium salts, potassium salts, cesium salts or lithium salts of phenol.

The alkaline earth metal compound is not particularly limited, and examples thereof include organic acid salts, inorganic salts, oxides, hydroxides, hydrides, and alkoxides of alkaline earth metal compounds. Specific examples thereof include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

The nitrogen-containing compound is not particularly limited, and examples thereof include quaternary ammonium hydroxides, salts thereof, and amines. Specific examples thereof include: quaternary ammonium hydroxides having an alkyl group, an aryl group, or the like, such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; secondary amines, such as diethylamine and dibutylamine; primary amines, such as propylamine and butylamine; imidazoles, such as 2-methylimidazole, 2-phenylimidazole, and benzimidazole; ammonia, tetramethylammonium borohydride, tetrabutylammonium borohydride, tetrabutylammonium tetraphenylborate, and tetraphenylammonium tetraphenylborate.

Examples of the transesterification catalyst include salts, such as zinc salts, tin salts, zirconium salts, and lead salts. Specific examples thereof include zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonate, zirconium oxyacetate, zirconium tetrabutoxide, lead(II) acetate, and lead(IV) acetate.

The basic compound catalyst and the transesterification catalyst described above may be used singly or in combination of two or more types thereof.

The amounts of the basic compound catalyst and the transesterification catalyst used (the total amount when used in combination) are preferably in the range from 1 × 10⁻⁹ to 1 × 10⁻³ mol, and more preferably from 1 × 10⁻⁷ to 1 × 10⁻⁴ mol with respect to 1 mol of the dihydroxy compound.

In melt polycondensation method, a dihydroxy compound and a carbonic acid diester are melted in a reaction vessel, and then the reaction is preferably carried out in a state where a monohydroxy compound produced is retained. In order to retain the monohydroxy compound, the reactor can be closed, depressurized or pressurized to control the pressure.

Also, for example, when the depolymerized monomer is at least one dicarboxylic acid compound selected from the group consisting of the general formulae (9') to (11') set forth above, the recycled resin can be manufactured by converting the dicarboxylic acid compound into an alkyl ester, acid halide, or acid anhydride, and then allowing it to undergo reaction with a diol compound.

### Examples

Hereinafter, the present invention will be specifically described with reference to Examples, but the present invention is not limited to them. Note that "%" is on the basis of mass unless otherwise noted.

### [Example 1]

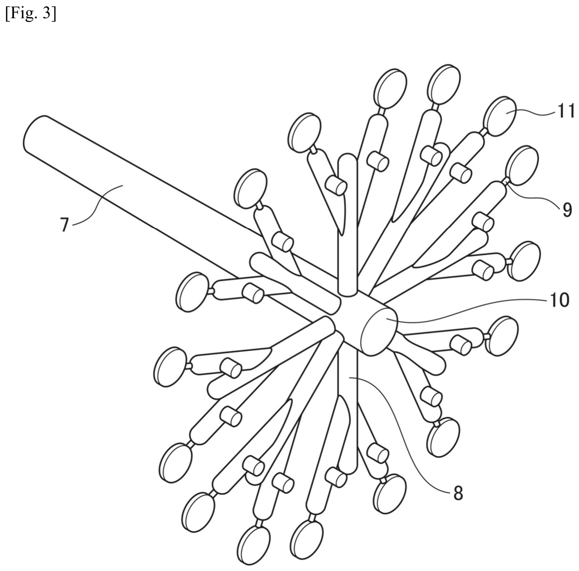

Molding waste products (mixture of a resin having a constitutional unit of BPEF (9,9-bis[4-(2-hydroxyethoxy)phenyl]fluorene) and a resin having a constitutional unit of BNE (2,2'-bis(2-hydroxyethoxy)-1,1'-binaphthalene)) were collected from a manufacturing plant for optical materials to obtain a waste product composition (content of molding waste products: 100% by mass, specific gravity: 1.25). Fig. 3 is a schematic diagram of an integrated product of plastic products and molding waste products obtained after injection molding. The molding waste products are those obtained by detaching plastic products 11 from the integrated product, and include a sprue part 7 (inner diameter: 4.3 mm, length: 48.1 mm), eight runner parts 8 with a branched structure (inner diameter: 2.5 mm, length to the branched structure: 12 mm, length of each branched structure portion: 9.6 mm), gate parts 9 (inner diameter: 1.0 mm), and a cold slug well part 10 at the end of the sprue part (inner diameter: 4.3 mm, length: 6.3 mm).

The waste product composition was fed on one end side of a conveyor (vibration transport bed, width: 30 cm, length: 1.5 m) vibrated at 50 Hz. At that time, 500 g of the waste product composition was fed over 10 seconds.

After the waste product composition reached the other end side of the vibration transport bed, the waste product composition was collected.

The waste product composition collected after the vibration transport was evaluated for entanglement according to the following criteria. The obtained results are shown in Table 1 below.
A: No entanglement
B: Almost no entanglement
C: A little entanglement
D: There is entanglement

### [Example 2]

The waste product composition was collected by the same method as in Example 1, except that 500 g of the waste product composition was fed over 20 seconds.

### [Example 3]

The waste product composition was collected by the same method as in Example 1, except that 250 g of the waste product composition was fed over 10 seconds.

### [Example 4]

The waste product composition was collected by the same method as in Example 1, except that 100 g of the waste product composition was fed over 10 seconds.

### [Example 5]

The waste product composition was collected by the same method as in Example 1, except that the vibration frequency of the vibration transport bed was changed to 40 Hz and 250 g of the waste product composition was fed over 10 seconds.

### [Example 6]

The waste product composition was collected by the same method as in Example 1, except that the vibration frequency of the vibration transport bed was changed to 60 Hz and 250 g of the waste product composition was fed over 10 seconds.

### [Comparative Example 1]

The waste product composition was collected by the same method as in Example 1, except that the vibration frequency of the vibration transport bed was changed to 0 Hz and 100 g of the waste product composition was fed over 10 seconds.

**[Table 1]**

| | Vibration frequency (Hz) | Total amount fed (g) | Feed rate (g/sec) | Amount supplied with respect to width of vibration transport bed (g/m) | Evaluation for entanglement |
|---|---|---|---|---|---|
| Example 1 | 50 | 500 | 50 | 1667 | C |
| Example 2 | 50 | 500 | 25 | 1667 | B |
| Example 3 | 50 | 250 | 25 | 833 | A |
| Example 4 | 50 | 100 | 10 | 333 | A |
| Example 5 | 40 | 250 | 25 | 833 | A |
| Example 6 | 60 | 250 | 25 | 833 | A |
| Comparative Example | 0 | 100 | 10 | 333 | D |

From the results in Table 1, it can be seen that the entanglement of the waste product composition has been eliminated or mitigated. Therefore, it can be seen that a recycled resin can be suitably manufactured from such a waste product composition.

### Reference Signs List

1 mold
2 sprue
3 runner
4 gate
5 cavity/core
6, 6' cold slug well
7 sprue part
8 runner part
9 gate part
10, 10' cold slug well part

## Claims

1. A method of manufacturing a recycled resin, comprising:
a step (1) in which a waste product composition containing a molding waste product having at least a runner part is supplied to a vibration transport bed, and the waste product composition is vibration-transported; and
a step (2) in which a recycled resin is obtained from the vibration-transported waste product composition.

2. The method according to claim 1, wherein a vibration frequency of the vibration transport bed is from 1 to 1,000 Hz.

3. The method according to claim 1, wherein a supply rate of the waste product composition to the vibration transport bed is from 5 to 100 g/sec.

4. The method according to claim 1, wherein an amount of the waste product composition supplied is from 100 to 5,000 g/m with respect to a width of the vibration transport bed.

5. The method according to claim 1, wherein the molding waste product has a specific gravity from 0.9 to 1.5.

6. The method according to any one of claims 1 to 5, wherein a resin that makes up the molding waste product includes a resin having at least one constitutional unit selected from the group consisting of general formulae (1) to (5) set forth below: 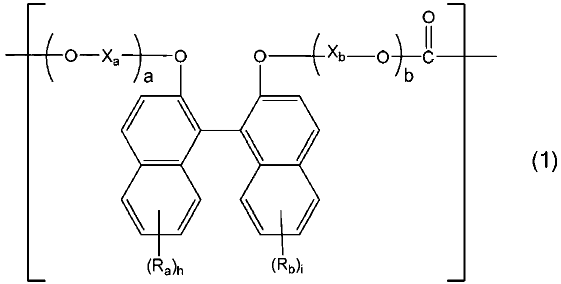 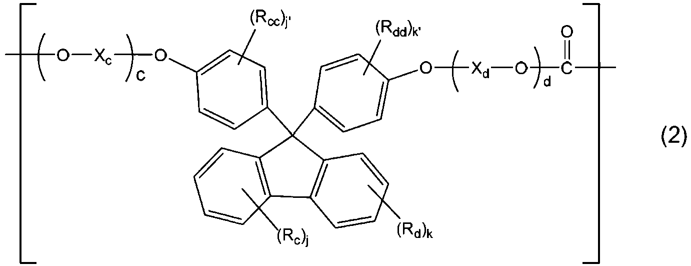 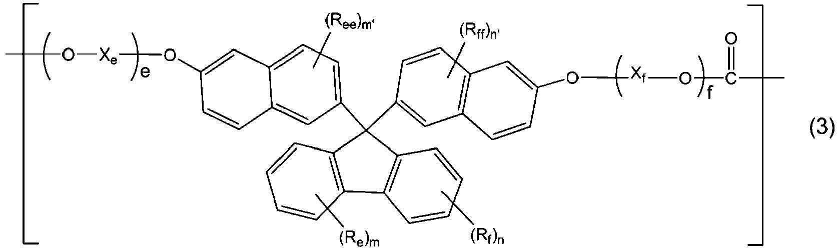 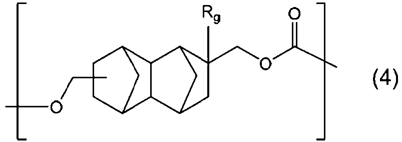 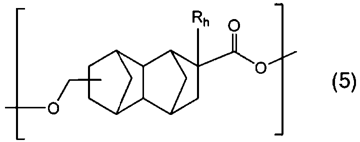 [wherein,
Xₐ, X_{b}, X_{c}, X_{d}, Xₑ, and X_{f} each independently represent an alkylene group having 1 to 4 carbon atoms,
Rₐ, R_{b}, R_{c}, R_{cc}, Rₐ, R_{dd}, Rₑ, Rₑₑ, R_{f}, and R_{ff} are each independently selected from a halogen atom, an alkyl group having 1 to 20 carbon atoms, an alkoxy group having 1 to 20 carbon atoms, a cycloalkyl group having 5 to 20 carbon atoms, a cycloalkoxy group having 5 to 20 carbon atoms, an aryl group having 6 to 20 carbon atoms, a heteroaryl group having 3 to 20 carbon atoms and containing one or more heterocyclic atoms selected from O, N, and S, an aryloxy group having 6 to 20 carbon atoms, and -C≡C-Rᵢ,
Rᵢ represents an aryl group having 6 to 20 carbon atoms or a heteroaryl group having 3 to 20 carbon atoms and containing one or more heterocyclic atoms selected from O, N, and S,
a, b, c, d, e, and f each independently represent an integer from 0 to 10,
h, i, j, j', k, k', m, m', n, and n' each independently represent an integer from 0 to 4, and
R_{g} and Rₕ each independently represent a hydrogen atom or an alkyl group having 1 to 3 carbon atoms].

7. The method according to any one of claims 1 to 5, wherein a resin that makes up the molding waste product includes an impurity resin having at least one constitutional unit selected from the group consisting of general formulae (6) to (8) set forth below: 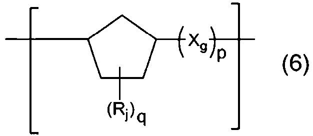 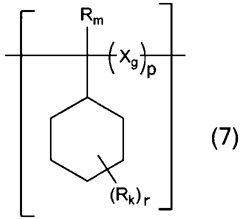 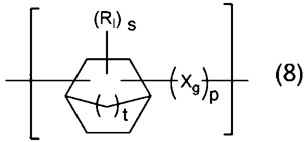 [wherein,
each X_{g} independently represents an alkylene group having 1 to 10 carbon atoms,
Rⱼ, Rₖ, and Rₗ are each independently selected from a halogen atom, a substituted or unsubstituted alkyl group having 1 to 20 carbon atoms, a substituted or unsubstituted alkoxy group having 1 to 20 carbon atoms, a substituted or unsubstituted cycloalkyl group having 5 to 20 carbon atoms, a substituted or unsubstituted cycloalkoxy group having 5 to 20 carbon atoms, a substituted or unsubstituted aryl group having 6 to 20 carbon atoms, a substituted or unsubstituted heteroaryl group having 3 to 20 carbon atoms and containing one or more heterocyclic atoms selected from O, N, and S, a substituted or unsubstituted aryloxy group having 6 to 20 carbon atoms, and -C≡C-Rᵢ,
Rᵢ represents a substituted or unsubstituted aryl group having 6 to 20 carbon atoms or heteroaryl group having 3 to 20 carbon atoms and containing one or more heterocyclic atoms selected from O, N, and S,
each p independently represents an integer of 0 or 1,
q, r, and s each independently represent an integer from 0 to 10,
t represents an integer from 1 to 3,
wherein when q is 2 or more and two Rⱼ's are present at adjacent carbon atoms, the two Rⱼ's may be bound together to form a ring structure,
when r is 2 or more and two Rₖ's are present at adjacent carbon atoms, the two Rₖ's may be bound together to form a ring structure,
when s is 2 or more and two Rₗ's are present at adjacent carbon atoms, the two Rₗ's may be bound together to form a ring structure, and
Rₘ represents a hydrogen atom or an alkyl group having 1 to 3 carbon atoms].

8. The method according to any one of claims 1 to 5, wherein a resin that makes up the molding waste product includes a resin having at least one constitutional unit selected from the group consisting of general formulae (9) to (11) set forth below: 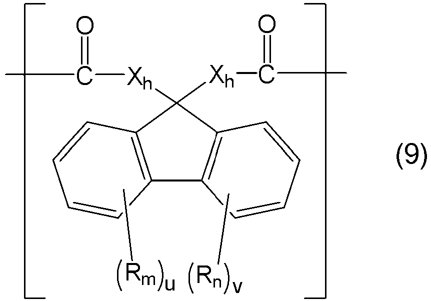 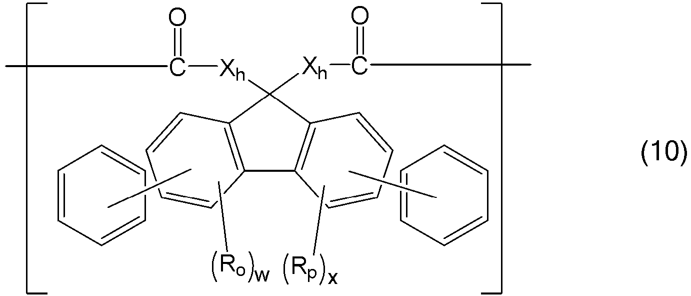 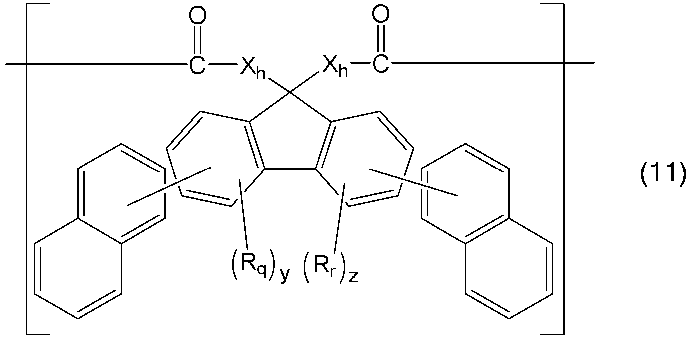 [wherein,
each Xₕ independently represents an alkylene group having 1 to 8 carbon atoms,
Rₘ, Rₙ, Rₑ, Rₚ, R_{q}, and Rᵣ are each independently selected from a halogen atom, a cyano group, and a substituted or unsubstituted alkyl group having 1 to 6 carbon atoms, and
u, v, w, x, y, and z each independently represent an integer from 0 to 2].
